# FASCICULE DE BREVET EUROPEEN

(11) **EP 4 072 997 B1**
(45) Date de publication et mention de la délivrance du brevet: **05.03.2025**
(21) Numéro de dépôt: 20824226.3
(22) Date de dépôt: 11.12.2020
(51) Int. Cl.: C01B 32/05, H01M 4/583, H01M 10/054, H01M 10/0525, H01M 4/62, H01M 4/587

(54) **MATÉRIAU CARBONE, SON UTILISATION DANS DES BATTERIES, SON PROCÉDÉ DE FABRICATION ET UNE ÉLECTRODE LE COMPRENANT**
KOHLENSTOFFMATERIAL, VERWENDUNG DAVON IN BATTERIEN, VERFAHREN ZUM PRODUZIEREN DIESES MATERIALS UND ELEKTRODE DAMIT
CARBON MATERIAL, USE THEREOF IN BATTERIES, METHOD FOR PRODUCING SAID MATERIAL AND ELECTRODE COMPRISING SAME

(30) Priorité: 13.12.2019 FR 1914354
(43) Date de publication de la demande: 19.10.2022
(73) Titulaire: Centre national de la recherche scientifique, 75016 Paris (FR); Université de Haute Alsace, 68093 Mulhouse Cedex (FR); Université Toulouse III-Paul Sabatier, 31062 Toulouse Cedex 9 (FR); Université de Picardie Jules Verne, 80025 Amiens Cedex 1 (FR)
(72) Inventeur: GHIMBEU, Camélia, 68057 Mulhouse Cedex (FR); BEDA, Adrian, 68200 Mulhouse (FR); TABERNA, Pierre-Louis, 31750 Escalquens (FR); SIMON, Patrice, 31500 Toulouse (FR); MORCRETTE, Mathieu, 80000 Amiens (FR); RABUEL, François, 80000 Amiens (FR)
(74) Mandataire: Brevalex
(86) Numéro de dépôt international: PCT/EP2020/085847
(87) Numéro de publication internationale: WO 2021/116455

(56) Documents cités:
- CN-A- 102 386 384
- CN-A- 103 996 833
- CN-A- 105 914 371
- US-A1- 2003 157 014
- LIFEN XIAO ET AL: "Low-Defect and Low-Porosity Hard Carbon with High Coulombic Efficiency and High Capacity for Practical Sodium Ion Battery Anode", ADVANCED ENERGY MATERIALS, vol. 8, no. 20, 1 July 2018 (2018-07-01), DE, pages 1703238, XP055715592, ISSN: 1614-6832, DOI: 10.1002/aenm.201703238
- BEDA ADRIAN ET AL: "Hard carbons derived from green phenolic resins for Na-ion batteries", CARBON, ELSEVIER, OXFORD, GB, vol. 139, 18 June 2018 (2018-06-18), pages 248 - 257, XP085494334, ISSN: 0008-6223, DOI: 10.1016/J.CARBON.2018.06.036
- E. IRISARRI ET AL: "Optimization of Large Scale Produced Hard Carbon Performance in Na-Ion Batteries: Effect of Precursor, Temperature and Processing Conditions", JOURNAL OF THE ELECTROCHEMICAL SOCIETY, vol. 165, no. 16, 1 January 2018 (2018-01-01), pages A4058 - A4066, XP055715213, ISSN: 0013-4651, DOI: 10.1149/2.1171816jes

## Description

L'invention concerne un matériau carboné comprenant des particules de carbone dur et non poreux de morphologie sphérique de faible taille et son utilisation en tant que matériau dans des dispositifs électrochimiques tels que des cellules électrochimiques, des piles, batteries et/ou des accumulateurs sodium ion.

Le carbone dur « hard carbon » est une forme du carbone désordonnée (ni graphite, ni diamant) qui ne peut pas être graphitisable même en chauffant à très haute température (3000°C). Il consiste en un mélange des zones des monocouches d'atomes de carbone empilés de manière aléatoire et des monocouches non-empilés, et possédant globalement un degré de graphitisation faible. Ces carbones sont généralement fabriqués par pyrolyse de précurseurs de carbone tels que des sucres, des déchets de la biomasse, des polymères et des résines phénoliques. L'utilisation du carbone dur en tant que matériau dans le domaine de l'électrochimie est étudiée depuis de nombreuses années. Sa disponibilité, son coût, sa résistance à la corrosion et sa bonne conductivité électronique en font un matériau très prometteur pour la fabrication d'électrodes pour des piles, des piles à combustibles et des batteries. En particulier ce matériau est prometteur pour la réalisation de piles sodium ion car il permet l'intercalation des ions sodium de manière réversible. Ainsi A. Beda et al., "Hard carbons derived from green phenolic resins for Na-ion batteries," Carbon, vol. 139, pp. 248-257, Nov. 2018 décrit un matériau carboné qui est un carbone dur obtenu par polymérisation d'un polyphénol, le phloroglucinol, et d'un aldéhyde, l'acide glyoxylique. Le procédé en trois étapes permet d'obtenir un matériau constitué de particules de forme hétérogène qui, après broyage, peuvent être utilisés dans des piles sodium ions.

Dans le domaine technique, on peut aussi citer les documents suivants :
- US2003/157014 ; CN102386384 ; CN2015914371 ; CN103996833 ;
- LIFEN XIAO et al: "Low-Defect and Low-Porosity Hard Carbon with High Coulombic Efficiency and High Capacity for Practical Sodium lon Battery Anode", Advanced Energy Materials, vol. 8, no. 20, page 1703238 ;
- E. IRISARRI et al., Journal of The Electrochemical Society, (20180000), vol. 165, no. 16, pages 4058 - 4066.

Par ailleurs, Maetz et al., « Facile and Sustainable synthesis of nitrogen-doped polymer and carbon porous spheres », Green Chem., 2017, vol. 19, pp. 2266-2274) décrit la synthèse de sphères poreuses de carbone par polymérisation de phloroglucinol, et d'acide glyoxylique en utilisant de la Triethylenediamine (TEDA) en tant que catalyseur de la réaction. Le procédé de synthèse ne nécessite pas d'étape de thermopolymérisation. Le matériau obtenu n'est pas adapté à une utilisation dans des électrodes du fait notamment de sa grande porosité.

Cependant pour qu'un matériau puisse être utilisé pour des électrodes, et notamment des électrodes de type sodium ion, le matériau doit présenter des caractéristiques physico-chimiques particulières pour pouvoir être performant Il faut notamment que le matériau permette une fabrication des électrodes simple et peu couteuse et permette d'obtenir des piles rechargeables, des batteries ou des accumulateurs, en particulier de type sodium-ions, ayant une capacité irréversible et réversible toute deux acceptables.

A cet effet l'invention a pour objet un matériau carboné, comprenant, consistant essentiellement en, ou consistant en, des particules de carbone dur et non poreux ayant une morphologie sphérique, ce matériau ayant une distance inter-réticulaire d₀₀₂ comprise entre 3,50 Å et 4,30 Å, et une surface spécifique totale, mesurée par la méthode BET N2, inférieure à 75 m²/g.

Un tel matériau présente par ces caractéristiques une facilité d'utilisation substantielle par rapport aux matériaux carbonés existants car ce matériau est simple à obtenir et ceci à partir de composés peu polluants et sa morphologie particulière et homogène assure une grande reproductibilité lors de la fabrication de l'électrode. De plus sa méthode de fabrication, qui est également un objet de l'invention permet, l'obtention directe d'une poudre homogène sans étapes de broyage, et particulièrement de broyage industrielle et/ou mécanique, du matériau résultant de la carbonisation. En effet le carbone dur issu des méthodes de fabrication conventionnelles se présente, après l'étape de carbonisation sous forme d'une masse ou d'un agglomérat de morceaux très dur qu'il est nécessaire de réduire en poudre pour son utilisation dans des électrodes. Cette étape de broyage, lorsque effectuée à un niveau industriel, doit se faire nécessairement en machine. L'utilisation de telles machines, telles que des broyeurs à billes, peuvent dégrader le carbone dur en augmentant ses défauts de structures et/ou en augmentant la présence de groupes oxygénés fonctionnels (COₓ). Le matériau carboné selon l'invention, qui ne nécessite pas une telle étape de broyage industrielle pour sa fabrication, préserve donc ses qualités intrinsèques et peut être utilisée directement. Ainsi, selon un aspect préféré de l'invention, le matériau est une poudre, avantageusement une poudre dont la taille apparente moyenne des grains est inférieure à 10 µm, et de préférence varie de 1 et 10µm.

Le carbone dur selon l'invention est un carbone de type dit « désordonné » et qui est non graphitisable (structure ordonnée) même chauffé à haute température (1g à plus de 2000C° pendant 1 heure sous Argon). La structure des carbones durs est désordonnée lorsqu'elle est comparée à des structures cristallines hautement ordonnées (par ex. de type graphite) ou peu désordonnées (carbone graphitisable, ou carbone « mou »). Cependant même ces carbones durs possèdent des zones plus ordonnées de type graphitique (c'est-à-dire des plans de graphène empilés), ce qui peut expliquer certaines de leurs propriétés électrochimiques. Une distance inter-réticulaire d₀₀₂ supérieure à 3,5 Å est généralement une caractéristique d'un carbone dur, car la distance d₀₀₂ du graphite est de 3,34 Å et celui des carbones mous varie d'environ 3,45 à 3,6Å. Au-delà d'une distance interréticulaire d₀₀₂ de 4,3 Å, le carbone est trop désorganisé et n'est généralement plus adapté à une utilisation en tant que matériau constitutif d'une électrode.

Les particules du matériau carboné selon l'invention ont une morphologie sphérique. Par morphologie sphérique on entend que ces particules ont une forme essentiellement sphérique. Par exemple la distance entre la surface et le centre de gravité de la particule (rayon) ne doit pas varier de plus de 10%, de préférence 5%. Ces sphères sont la plupart du temps des microsphères, c'est-à-dire que leurs diamètres sont essentiellement de l'ordre de 0,1 à 100 microns, mais d'autres dimensions pourraient être envisagées.

De préférence la distance interréticulaire, qui est préférablement mesurée par diffraction par rayon X, DRX (voir ci-dessous), est supérieure à 3,6 Å. Selon un aspect préférentiel cette distance est entre 3,70 Å et 4,00 Å, avantageusement est choisi dans une gamme allant de 3,75 Å à 3,90 Å, et encore plus préférentiellement dans une gamme allant de 3,80 Å à 3,90 Å. La distance interréticulaire très particulièrement préférée varie de de 3,70 Å à 3,80 Å.

La surface spécifique totale du matériau selon l'invention, mesurée par la méthode BET N₂, est de préférence de 1 à 50 m²/g, en particulier de 1 à 10 m²/g et encore plus préférentiellement de 1 à 3,5 m²/g.

Selon un aspect préférentiel, la surface spécifique totale, mesurée par la méthode BET CO₂, du matériau selon l'invention est de 1 à 100 m²/g, de préférence de 1 à 60 m²/g, en particulier de 1 à 21 m²/g, et très préférentiellement de 1 à 10 m²/g.

Une caractéristique particulièrement préférée de l'invention est que le matériau carboné présente une densité tapée (en anglais « *tapped density »),* ou masse volumique tassée, qui est particulièrement élevée comparée à d'autres matériaux carbonés connus. En fait le matériau peut présenter une densité tapée similaire à d'autres matériaux utilisé au niveau industriel et cela notamment sans étape de broyage préalable, étape qui a généralement tendance à dégrader les propriétés du matériau. Ainsi le matériau selon l'invention présente avantageusement une densité tapée supérieure à 0,7 g/cm³, par exemple qui est choisie dans la gamme de 0,72 g/cm³ à 1.1 g/cm3, de préférence supérieure à 0,84 g/cm³. Le mode opératoire de la mesure, qui est une méthode standard est décrite ci-après.

Les particules de carbone dur ont essentiellement une taille comprise entre 0 µm à 15µm, de préférence entre 0 µm à 10µm. Selon un aspect de l'invention la distribution particulaire est homogène et la valeur moyenne D50 moyenne des particules peut aller de 0,4 µm à 5 µm, de préférence de 1,5 µm à 4,5 µm ou de 3,5 µm à 4,5 µm, notamment environ 3,8 µm. Selon un autre aspect de l'invention, qui est préféré, la distribution granulométrique n'est pas homogène mais comprend au moins 2 pics de particules distincts. Un premier pic prédominant comprend des particules à faible taille (généralement environ 4 ± 0,5 µm) avec un pic plus large vers les plus grande tailles (généralement environ 7± 0,5). La taille moyenne de particules constituant ces pics sont par exemple de respectivement de 2,5 à 4 µm et de 7,1 à 7,7 µm. Préférablement le rapport de ces tailles ont un rapport d'environ 2,8 ± 20. Une telle distribution de particule est avantageuse particulièrement car elle permet l'augmentation de la masse volumique.

Le matériau selon l'invention a avantageusement une surface active (ASA) faible, de préférence inférieure à 12m²/g, et encore plus préférentiellement inférieure à 5 m²/g et même inférieure à 3 m²/g et même 1 m²/g.

Enfin le matériau selon l'invention a avantageusement une teneur en groupe fonctionnels à base d'oxygène très faible, notamment inférieure à 0,5 mmol/g, de préférence inférieure à 0,1 mmol/g, en particulier inférieure à 0.05 mmol/g.

Le matériau décrit ci-après et référencé sous la dénomination ABE 1300, ABE 1400, ABE 1500 ou ABE 1600, est un matériau particulièrement préféré selon l'invention. En particulier ABE 1500°C est particulièrement adapté à une utilisation en tant qu'électrode et plus particulièrement en tant qu'anode dans des batteries sodium ion. Un autre aspect de l'invention est un procédé de fabrication d'un matériau carboné non-poreux comprenant au moins les étapes suivantes :
a. une étape de mélange, en présence d'un solvant en particulier d'un solvant aqueux, d'au moins
   - un catalyseur aminé choisi de préférence dans le groupe constitué de Triéthylènediamine (TEDA), hexaméthylènetétramine (HMTA), quinuclidine, triéthylamine (TEA) et de leur mélanges, avantageusement ledit catalyseur est le TEDA , encore plus avantageusement le catalyseur est I'HMTA;
   - une source de carbone (ou susceptible de former le carbone après pyrolyse) tel qu'un composé aromatique hydroxylé choisi notamment dans le groupe constitué du phénol, du résorcinol et du phloroglucinol, catechin, pyrogallol, hydroxyquinol, acide gallique, des polyphénols, tels que les tanins, et de leurs mélanges, avantageusement ledit composé aromatique hydroxylé est le phloroglucinol, ou un tanin condensé; et
   - un composé aldéhyde, choisi de préférence dans le groupe constitué du glyoxal, du formaldéhyde, de l'acétaldéhyde, d'un cétoacide, de l'acide glyoxylique, de l'acide pyruvique, de l'acide 2-méthyl-3-oxopropanoïque, et de leurs mélanges, de préférence le composé aldhéhyde est l'acide glyoxylique;
b. une étape de maturation du mélange obtenu à l'issue de l'étape a), de préférence à une température comprise entre 20 et 35°C, par exemple pendant une durée comprise entre 0,5 et 5 jours permettant l'obtention d'une phase solide comprenant des sphères de résine phénolique et d'une phase liquide ;
c. une étape de séparation ménagée de ladite phase solide de ladite phase liquide, de préférence sans centrifugation;
d. une étape de polymérisation et/ou de séchage, éventuellement thermique, de ladite phase solide pendant une période 1 à 48h aboutissant à la formation d'une résine phénolique sèche ; et
e. une étape de carbonisation de ladite résine phénolique sèche, de préférence en présence d'un flux de gaz inerte à une température de préférence comprise entre 1200 °C et 2000 °C pour obtenir un matériau carboné non-poreux ; et
f. éventuellement une étape de récupération dudit matériau carboné non-poreux. Le solvant est avantageusement un solvant protique polaire, qui peut être choisi parmi l'eau et/ou les alcools (tels que l'éthanol, le propanol et le butanol), seuls ou en mélange bien qu'un solvant non mélangé (i.e. pur au moins à 95% v/v), par exemple l'éthanol, soit préféré.

Le solvant est de préférence un solvant aqueux est plus particulier de l'eau, pure ou simplement potable (et donc comprendre certains sels). De préférence le solvant est de l'eau, et plus particulièrement de l'eau pure.

La quantité de solvant, en particulier d'eau, par rapport au précurseur phénolique (1 g) peut éventuellement être choisie dans la gamme allant de 10 à 200 g, de préférence de 20 à 60 g, (ou un rapport massique eau : précurseur 20 :1 à 60 :1).

La quantité d'agent de réticulation (aldéhyde) par rapport au précurseur phénolique (1g) peut éventuellement être choisie dans la gamme allant de 0,5 à 4 g, de préférence de 0,8 à 1,8 g ( c'est à dire de 0.88 à 1.8 en pourcentage massique par rapport à la masse totale de précurseur (soit un ratio massique agent réticulation : précurseur allant de 0,88 :1 à 1,8 : 1).

La quantité de catalyseur (agent aminé) par rapport au précurseur phénolique peut éventuellement être choisie dans la gamme allant de 0,1 à 0,9 g, de préférence de 0,3 à 0,7 g.

Le composé aromatique hydroxylé peut également être choisi parmi les composés à noyau benzénique comportant un groupe hydroxy. Le noyau benzénique peut ne pas être substitué autrement que par le groupe hydroxy (composé du type "phénol"), ou substitué par un ou plusieurs groupes, tels que ceux suivants : groupe hydrocarboné, halogène, nitro, amino, et/ou alkoxy. De tels composés comprennent le phénol, les halophénols, les aminophénols, les hydrocarbyl-phénols ("hydrocarbyl" incluant par exemple, les groupes linéaires branchés ou cycliques du type alkyl, alcényl, or alcynyl contenant par exemple de 1 à 6 carbones, éventuellement substitués par un ou plusieurs atomes d'oxygène ou d'azote, naphtols, nitrophénols, hydroxyanisoles, acides hydroxybenzoiques, phénols substitués par un ou plusieurs esters d'acide gras un ou plusieurs polyalkyleneoxy, phénols contenant un lien azo (p-hydroxyazobenzene), acides phénolsulfonique (acide p-phénolsulfonique). Ces composés incluent les fluorophénols, chlorophénols, bromophénols, et les iodophénols, les 2-, 3-, and 4-aminophénols, les 3,5- et 2,5-diaminophénols ; les 2-, 3-, et 4-nitrophénols, 2,5- et 3,5-dinitrophénol ; les crésols, méthylphénols or hydroxytoluènes, les xylénols, les éthylphénols, n-propylphénols, isopropylphénols, butylphénols, hexylphénols, octylphénols, nonylphénols (, phenylphénols, les acides hydroxycinnamique ; les hydroxyanisoles comme 2-methoxyphénol, 3-methoxyphénol, 4-methoxyphénol, 3-t-butyl-4-hydroxyanisole ; les acides 2-hydroxybenzoique, 3-hydroxybenzoique, 4-hydroxybenzoique, et leurs esters (méthyl salicylate and éthyl-4-hydroxybenzoate).

Des exemples de composés phénolique à deux groupes hydroxy sont les suivants : catéchol, résorcinol, hydroquinone, hydrocarbyl-bis-phénols (comme bis-phénol A, méthylènebisphénol, et 4,4'-dihydroxystilbène), 4,4'-dihydroxybiphényl (4,4'-biphénol), halo-diphénols (2-halorésorcinols, 3-halorésorcinols, et 4-halorésorcinols, où halo est fluoro, chloro, bromo, ou iodo), amino-diphénols (2-a minorésorcinol, 3-a minorésorcinol, et 4-a minorésorcinol), hydrocarbyl-diphénols (2,6-dihydroxytoluène, 2-methylrésorcinol; 2,3-, 2,4-, 2,5-, and 3,5-dihydroxytoluène, 1-ethyl-2,6-dihydroxybenzène, acide cafféique ou chlorogénique), nitro-diphénols (2- ou 4-nitrorésorcinol), dihydroxyanisoles (3,5-, 2,3-, 2,5-, ou 2,6-dihydroxyanisole, vanilline), acides dihydroxybenzoïque (acides 3,5-, 2,3-, 2,5-, ou 2,6-dihydroxybenzoïque), et leurs esters, l'acide vanillique, phénolphthaleine.

Des exemples de composés comprenant trois groupes hydroxy sont les suivants : phloroglucinol (1,3,5-trihydroxybenzène), pyrogallol (1,2,3-trihydroxybenzène), 1,2,4-trihydroxybenzène, 5-chloro-1,2,4-trihydroxybenzène, resveratrol (trans-3,5,4'-trihydroxystilbène), hydrocarbyl-triphénols (2,4,6-trihydroxytoluène, méthylphloroglucinol, et 3,4,5-trihydroxytoluène), halo-triphénols (5-chloro-1,2,4-trihydroxybenzène), carboxy- triphénols (acides 3,4,5-trihydroxybenzoique et 2,4,6-trihydroxybenzoiques), nitro- triphénols (2,4,6-trihydroxynitrobenzène), et phénol-formaldéhyde résoles ou les résines du type novolak.

Des exemples de composés comprenant une multitude de groupes hydroxy sont les suivants : tanins (incl. acide tannique), ellagotanins, gallotanins, polymères de phénol (poly-(4-hydroxystyrène), phénol-formaldéhyde résoles ou les résines du type novolak contenant au moins quatre groupes phénols (généralement MM 500-5000), quercétin, acide ellagique et tetraphénol éthane. Les tanins sont un groupe de molécules d'origine naturelles provenant des végétaux et aisément disponibles. Ce sont des polyphénols de haut poids moléculaires, généralement allant de 500 à 20000 g/mol. Ils peuvent être caractérisés notamment par la présence d'au moins 12 groupes hydroxyles -OH et 5 groupement phényles. Parmi les tanins on distingue les tanins hydrolysables, les phlorotanins et les tanins condensés. Les tnnins hydrolysables (pyrogallol) contiennent des résidus du glucose qui sont estérifiés et plus de groupement -OH. Les phlorotanins contiennent des groupements phloroglucinol et sont généralement extraits des algues brunes. Les tanins condensés (catéchol et phlobotanins), aussi appelés proanthocyanidines , qui contiennent des groupements flavan-3-ol. Les tanins condensés et les phlorotanins sont les tanins les plus adaptés à être utilisés dans le procédé selon l'invention et en particulier les tanins condensés tels que les tanins de mimosa ou de cachou. Pour distinguer les tanins condensés des tanins hydrolysables, il est possible d'effectuer leurs spectres FT-IR. Les tanins hydrolysés présentent un pic -C=O à 1730 cm⁻¹, et éventuellement un pic -CO° à 1250 cm⁻¹, pics qui sont absents, ou moins accentués pour les tanins condensés.

Comme indiqué précédemment le phloroglucinol et les tanins condensés, en particulier ceux de mimosa et de cachou, sont particulièrement préférés.

Le composé peut également être choisi parmi les composés aldéhydes, dialdéhydes, et polyaldéhydes. Ils peuvent être représentés par les formules suivantes :

R-CHO

où R un groupe linéaire branché ou cyclique du type alkyl, alcényl, ou alcynyl contenant au moins 1, 2, 3, 4, 5, 6, 7, ou 8 atomes de carbone. De tels exemples comprennent : acétaldéhyde, propanal (propionaldéhyde), butanal (butyraldéhyde), pentanal (valeraldéhyde), hexanal, crotonaldéhyde, acroléine, benzaldéhyde, et furfural;

OHC-R-CHO

où R est une liaison covalente (glyoxal) ou groupe linéaire branché ou cyclique du type alkyl, alcényl, ou alcynyl contenant au moins 1, 2, 3, 4, 5, 6, 7, ou 8 atomes de carbone. De tels exemples comprennent : glyoxal, malondialdéhyde, succinaldéhyde, glutaraldéhyde, adipaldéhyde, pimelaldéhyde, suberaldéhyde, sebacaldéhyde, cyclopentanedialdéhyde, terephthaldéhyde, et furfuraldéhyde. Selon une variante un des hydrogènes du composé aldéhyde peut être remplacé par un groupe hydrocarboné, pour former par exemple une aldéhyde-cétone dione, par exemple le méthylglyoxal ou 1,3-butanedione.

Une variante avantageuse du composé aldéhyde à utiliser dans le procédé de l'invention comprend l'utilisation comme, ou parmi, les aldéhydes ci-dessus décrits, d'au moins un composé organique comprenant à la fois une fonction acide et une fonction aldéhyde. On peut citer ainsi les composés organiques comprenant à la fois une fonction acide et une fonction aldéhyde de formule suivante (« cétoacides ») :

HOOC-R-CHO

où R est présent ou absent, et si présent, représente une chaine hydrocarbonés saturée, linéaire, branchée ou cyclique de préférence en C1-C20, éventuellement substituée, présentant éventuellement une ou plusieurs insaturations, éventuellement incluant un ou plusieurs hétéroatomes et/ou fonctions.

Dans le procédé selon l'invention, l'aldéhyde joue le rôle agent de réticulation principal , il peut donc être susceptible de former une résine phénolique en utilisant les motifs phénols des composés précurseurs de carbone.

Le terme « substitué » désigne une ou plusieurs substitutions d'un atome d'hydrogène par un atome d'halogène ou par un groupe tel que par exemple : alkyle, halogénoalkyle, cycloalkyle, alcényle, alcynyle, aryle, un groupe hétérocyclique, comme un hétérocycloalkyle, un hétéroaryle, ou par une ou plusieurs fonctions latérales, comme par exemple des fonctions amine, cyano, acide, ester, amide, etc., sans limitation particulière.

Le terme « fonction » désigne un groupe chimique modifiant au moins une propriété chimique, comme par exemple une fonction amide, ester, oxo, etc., sans limitation particulière.

Selon une variante, R est présent ou absent, et si présent, représente une chaine alkyle, linéaire, branchée ou cyclique de préférence en C1-C20, éventuellement substituée. Parmi les groupes alkyle on peut citer : méthyle, éthyle, propyle, et butyle, ou encore pentyle, hexyle, octyle, nonyle, décyle, dodécyle, hexadécyle, octadécyle, isopropyle, iso-butyle, sec-butyle, tert-butyle, 2-éthylhexyle, 2 méthylbutyle, 2-méthylpentyle, 1-méthylpentyle et 3-méthylheptyle.

Parmi ces composés on peut citer les alpha-cétoacides, ou 2-oxoacides (acide pyruvique); les bêta-cétoacides ou 3-oxoacides (acide acétylacétique) ; les gamma-cétoacides ou 4-oxoacides (acide lévulinique).

Parmi les exemples de ce type de composés, on peut citer :
- Acide glyoxylique : HOOC-CHO ;
- Acide pyruvique: HOOC-CH2-CHO ; et
- Acide 2-méthyl-3-oxopropanoïque.

L'étape de mélange des composants peut comprendre une étape préliminaire de dissolution de la source de carbone et notamment des composés aromatique hydroxylé et/puis aldéhyde dans le solvant, ces étapes étant réalisées sous agitation. Le temps de dissolution peut varier de quelques minutes (par ex. 5minutes) à plusieurs heures (par ex. 5 heures). Une période de 0,5 à 1 heure peut être suffisante. L'ajout du catalyseur peut ensuite être réalisé sous agitation également. La période d'agitation est généralement plus courte. En général, elle est choisie de 1 minutes à 1 heure, en particulier de 5 à 15 minutes. Il convient de noter que le terme de catalyseur est utilisé pour désigner la principale fonction du composé aminé qui est de catalyser la réaction de réticulation entre le précurseur de carbone et l'agent de réticulation principal, par exemple l'aldéhyde. Cependant ce composé aminé peut également, mais dans un moindre degré, participer à la réticulation et ainsi être considéré comme un agent de réticulation secondaire.

L'étape b) de maturation du mélange obtenu à l'issue de ces étapes peut être réalisée à température ambiante (env. de 20 à 25°C), ce qui est un avantage en termes de coûts. De préférence la réaction de maturation à lieu au repos et non sous agitation. Il peut également être avantageux de travailler en atmosphère contrôlée, et notamment de fermer le récipient contenant le mélange ou de travailler sous gaz inerte, ceci pour éviter l'évaporation du solvant. L'étape de maturation dure avantageusement plus de 24 heures. Une étape de maturation de 36 à 72 heures, et plus particulièrement de 44 à 52 heures (par exemple 48 heures) est préférée.

L'étape c) de séparation de la phase solide, où résine, et de la phase liquide est réalisée de préférence par des méthodes douces, par exemple par simple versement (ou aspiration) du liquide peut suffire. La phase solide restant attaché aux parois du récipient. Avantageusement on peut recommander de ne pas appliquer des moyens de centrifugation pour des particules d'une taille suffisante (par exemple plus de 1 micron). Ainsi il est recommandé selon un aspect particulièrement préféré de l'invention de ne pas appliquer une force élevée sur la résine comme par exemple la centrifugation à haute vitesse, par exemple au-delà de 10 à 15 milles tours/minutes. L'étape d) qui est une étape de polymérisation et/ou de séchage, est de préférence une étape thermique. Cette étape thermique est de préférence douce et peut avoir lieu par chauffage à une température allant de 70°C à 150°C. Avantageusement cette température est choisie dans une gamme allant de 75°C à 85°C, en particulier aux alentours de 80°C. L'étape thermique peut être effectuée au repos et est choisie de préférence pour diminuer le coût et les étapes de la synthèse. Le temps de chauffage peut être de 6 à 24 heures, et de préférence de 8 à 16 heures, par exemple environ 10 ou 12 heures.

Lors d'un séchage / polymérisation à température ambiante le temps de séchage peut varier de 10 à 48 heures, par exemple une période de 20 à 24 heures donne des résultats satisfaisants.

A l'issue de cette étape la résine sèche ainsi obtenue est soumis à une étape de carbonisation. Par carbonisation on entend une étape de pyrolyse ou de thermolyse. La température de carbonisation peut être avantageusement choisie dans la gamme des 1300°C à 2000°C. Cette carbonisation a lieu de préférence dans une atmosphère dépourvue d'oxygène, et de préférence sous argon. La variation de température peut être avantageusement de 1°C/min à 15 °C/min, de préférence aux environs de 5°C/min. L'utilisation d'une température d'environ 1500°C, par exemple ± 20% permet d'obtenir un matériau particulièrement adapté à une utilisation en tant qu'électrode et plus particulièrement en tant qu'anode dans des batteries sodium ion.

Une fois l'étape de carbonisation complétée le matériau carboné est obtenu. Il est généralement sous la forme d'une poudre et peut être récupéré par simple ramassage. Une telle poudre peut être utilisée directement dans la fabrication d'électrodes pour un dispositif, notamment électrochimique, et ce sans devoir être soumis à une étape de broyage substantielle comme usuellement pratiquée.

Un autre objet selon l'invention est donc un matériau carboné obtenu ou pouvant être obtenu par le procédé selon l'invention.

Un matériau carboné selon l'invention peut avantageusement être utilisé dans la fabrication d'une électrode ou d'un matériau pour électrode, de préférence d'une électrode pour batterie (ou pile) rechargeable, en particulier pour batteries sodium-ion, lithium-ion, potassium-ion ou Li-S. Il peut également être utilisé en tant qu'additif et combiné à un ou plusieurs autres matériaux dans un dispositif et en particulier un dispositif électrochimique. Une telle utilisation ainsi qu'une telle électrode sont d'autres objets de l'invention.

Selon un mode préféré de l'invention l'électrode présente une porosité après calandrage (et éventuellement pastillage) inférieure à 65%, de préférence inférieure à 55%, avantageusement inférieure à 48% et encore plus préférentiellement inférieure à 44%. Cette porosité peut donc être de 30% à 65 %, de préférence de 35% à 55% , avantageusement de 35% à 50%.

Selon un mode préféré de l'invention, l'électrode, lorsqu'utilisée dans une demi-cellule sodium-in (cathode Na), présente une capacité irréversible faible, et notamment inférieure 14%, de préférence inférieure à 12% et avantageusement inférieure à 9%. De manière particulièrement préférée cette capacité atteint environ 8%.

Selon un mode préféré de l'invention, l'électrode, lorsqu'utilisée dans une cellule sodium-ion complète (cathode NVPF), présente une capacité spécifique élevée, pouvant aller de 100 mAh.g⁻¹ à 140 mAh.g⁻¹, qui peut être égale à 125 mAh.g⁻¹.

Ainsi une électrode selon l'invention comprend le matériau carboné tel que décrit ci-avant. Il peut avantageusement comprendre un ou plusieurs matériaux, tels qu'un additif conducteur (par exemple du noir de carbone) et/ou un liant, (par exemple un polymère tel que le PolyVinyliDene Fluoride, PVDF ). Selon une variante de l'invention aucun additif conducteur n'est présent. Une telle électrode peut contenir une majorité de matériau carboné selon l'invention, en particulier plus de 80% en masse, de préférence plus de 90%, par exemple environ 97% de matériau carboné. Cette quantité est donc avantageusement de 80% à 99%, de préférence de 85% à 98%, par exemple de 88% à 94%. La quantité de conducteur peut varier de 0% à 10%, de préférence de 2% à 5%. La quantité de liant peut varier de 1% à 10%, de préférence de 2% à 5%. De préférence la fabrication d'une telle électrode comprend éventuellement le mélange de ses éléments constitutif et avantageusement une étape de calandrage du matériau ou du mélange pour obtenir une électrode selon l'invention. Un tel procédé de fabrication est également un objet de l'invention.

Un autre objet de l'invention est une batterie, un accumulateur ou une pile, éventuellement rechargeable, ou un dispositif électrochimique comprenant soit le matériau carboné selon l'invention, soit une électrode selon l'invention.

### Brève description des figures

L'invention sera mieux comprise à l'aide des exemples de mise en oeuvre de l'invention et des dessins annexés dans lesquels :
[Fig. 1] la figure 1 est un schéma d'une méthode selon l'invention de fabrication d'un carbone selon l'invention.
[Fig. 2] la figure 2 est une image obtenue par MEB d'un carbone selon l'invention ABE 1300 (échelle 20 µm).
[Fig. 3] la figure 3 est une image obtenue par MEB d'un carbone connu, HC-water.
[Fig.4 a et b] la figure 4a est une image obtenue par MEB du carbone selon l'invention ABE 1300 qui comprend également un graphe 4b représentant la distribution des particules.
[Fig.5 a et b] la figure 5b est une image obtenue par MEB d'un carbone selon l'invention obtenu selon le même procédé qu'ABE 1300 mais sans étape thermique à 80°C et qui comprend également un graphe 5a représentant la distribution des particules.
[Fig.6] la figure 6 est une vue explosée de l'assemblage d'une configuration en demi-cellules selon l'invention.
[Fig.7] la figure 7 est une vue explosée de l'assemblage d'une configuration d'une batterie selon l'invention.
[Fig. 8] la figure 8 montre les performances de la demi cellule utilisant le matériau ABE 1400 selon l'invention, C/50 à 25°C.
[Fig. 9] la figure 9 montre les performances de la demi cellule utilisant le matériau ABE 1500 selon l'invention C/50 à 25°C.
[Fig. 10] la figure 10 montre les performances de la demi cellule utilisant le matériau ABE 1600 selon l'invention C/50 à 25°C.
[Fig. 11] la figure 11 montre les performances de la demi cellule utilisant un carbone dur PAC2 C/50 à 25°C.
[Fig. 12] la figure 12 montre l'allure du cyclage en galvanostatique de la cellule complète réalisée avec le matériau ABE 1300 lors de la formation à C5 & D5
[Fig. 13] La figure 13 montre la rétention de la cellule complète réalisée avec le matériau ABE 1300 en galvanostatique (formation C5 & D5 sur 5 cycles puis 1C & 1D sur 100 cycles)
[Fig. 14] la figure 14 montre la rétention de la cellule complète réalisée avec le matériau ABE 1300 en galvanostatique à différents régimes de charge et avec un régime de décharge constant
[Fig. 15] la figure 15 montre la rétention de la cellule complète réalisée avec le matériau ABE 1300 en galvanostatique à différents régimes de décharge et avec un régime de charge constant.
[Fig. 16] : la figure 16 sont des images obtenues par MEB de carbones selon l'invention obtenu selon le procédé décrit à l'exemple 3bis.
[Fig.17] la figure 17 est une image obtenue par MEB des carbones selon l'invention MC-00 et MC-01 et qui comprennent également un graphe représentant la distribution des particules.
[Fig.18] la figure 18 est une image obtenue par MEB des carbones selon l'invention MC-00, MC-04 et MC-05 et qui comprennent également un graphe représentant la distribution des particules.
[Fig.19] la figure 19 est une image obtenue par MEB des carbones selon l'invention MC-0524, MC-05 et MC-0572 et MC-0597 et qui comprennent également un graphe représentant la distribution des particules.
[Fig.20] La figure 20 représente les spectre FT-IR de différents tanins hydrolysables (Châtaignier, myrobalan, tara) mesuré sur un spectrophotomètre Jasco FT/IR-4100, en utilisant un programme de gestion « Jasco Spectra Manager » et une résolution à 0,4 cm⁻¹.

### Exemple 1 : Synthèses de matériaux carbonés selon l'invention

4,1g de phloroglucinol et 3,6 g acide glyoxylique ont été dissout dans 200 mL (g) l'eau sous agitation mécanique (~ 30 min -1h) à la température ambiante (25°C) dans un ballon. Ensuite, 1,8 g de triéthylènediamine, (TEDA) a été ajouté dans ce mélange et agité pendant environ 5-10 min jusqu'à dissolution compète. L'ajout de la TEDA comme agent de réticulation/catalyseur provoque la formation d'une solution turbide de sphères de résine phénolique. Le mélange est laissé au repos pendant un temps de vieillissement de 24h. Les sphères augmentent leurs tailles et leur poids et se déposent sur le fond du ballon. Deux phases sont observées : une phase solide (composée de sphères de polymère) et une phase liquide. Cette dernière est retirée et la phase solide récupérée (sans centrifugation, par simple versement) et séchée à l'étuve à 80°C pendant environs 12 heures pour évaporer l'eau et pour mieux réticuler les sphères de résine. Une étape de pyrolyse à ensuite a été réalisée dans une atmosphère inerte (Ar), en chauffant 6,5 g de la résine obtenue avec une vitesse de chauffe de 5°C/min jusqu'à 1300°C, 1400 °C, 1500 °C ou 1600°C et une fois la température désirée atteinte un pallier d'une heure (1h) est fait puis une étape de refroidissement naturelle est réalisé. Le carbone dur est ainsi obtenu (~ 2,5 g) est utilisé par la suite sans avoir besoin d'une étape de broyage pour uniformiser la taille des particules.

Les matériaux obtenus sont dénommés ABE1300, ABE 1400, ABE 1500 et ABE 1600.

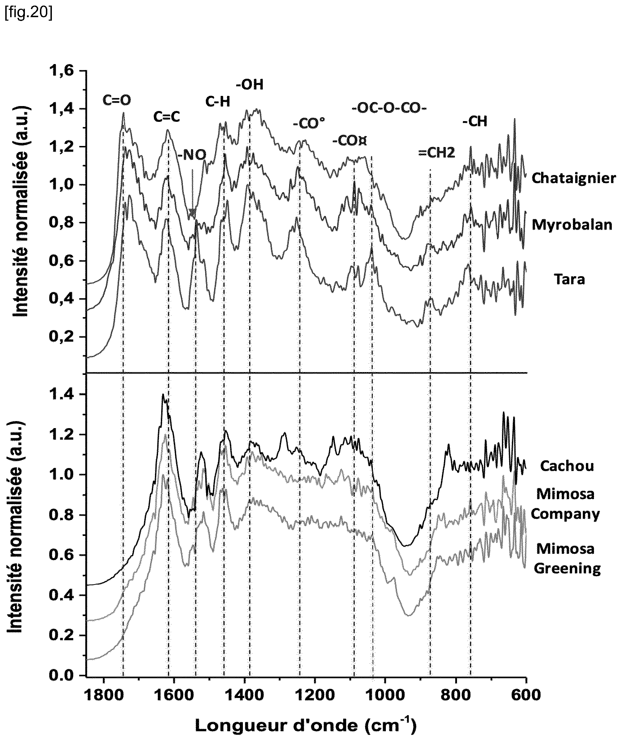

On note que le carbone dur ABE 1300 a été synthétisé dans des quantités plus importantes (30g) et que ce changement d'échelle n'a pas produit de changement notable sur la structure ou sur la morphologie du carbone dur ainsi obtenu.
Cinq autres matériaux selon l'invention ont été synthétisés avec comme précurseurs des tanins condensés de mimosa et de cachou. Les spectres de la figure 20 mettent en évidence les différences structurelles entre les tanins condensés et les tanins hydrolysables. Les matériaux Mimosa -G (MG) et Cachou (C) ont été achetés chez GREEN'ING (France) tandis que le matériau Mimosa-C (MC) a été obtenu de Mimosa Extract Company Ltd.

| **Matériau aromatique hydroxylé** | **Type de tanin** | **Constituants** | **Unité trsucturelle principale** |
|---|---|---|---|
| **Mimosa-C (MC)** (Acacia mearnsii) | Condensé | 66 % de tanins condensés | *Tanin* |
| | | | 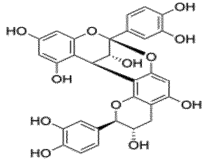 |
| **Mimosa-G (MG)** *(Acacia mearnsii)* | Condensé | | *Tanin* |
| | | 60 à 65 % de tanins condensés | |
| **Cachou (C)** *(Acacia catechu)* | Condensé | Tanins condensés + flavonoles (quercitrine) | *Quercitrine* |
| | | | 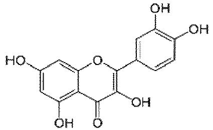 |

8 g de précurseur i.e., Mimosa-G, Mimosa-C ou Cachou et 9.6 g acide glyoxylique ont été dissout dans 320 mL (g) l'eau sous agitation mécanique (~ 30 min) à la température ambiante (25°C) dans un ballon. La réaction entre le précurseur phénolique (hydroxylé) et l'aldéhyde (agent de réticulation) permet d'obtenir une résine phénolique. Ensuite, 4.992 g d'hexamethylenetetramine, (HMTA) a été ajouté dans ce mélange et agité pendant environ 5-10 min jusqu'à dissolution compète. L'ajout de la HMTA comme catalyseur provoque la formation d'une solution turbide de sphères de résine phénolique. Le mélange est laissé au repos pendant un temps de vieillissement de 48 h. Les sphères augmentent leurs tailles et leur poids et se déposent sur le fond du ballon. Deux phases sont observées : une phase solide (composée de sphères de polymère) et une phase liquide (composé du solvant et de reste des produits organiques résiduels). Cette dernière est retirée et la phase solide récupérée (sans centrifugation), par simple versement pour les synthèses utilisant les tanins de mimosa comme précurseurs. Pour le tanin provenant du cachou, une centrifugation a été nécessaire du fait de la faible taille des particules (< à 1µm). La phase solide a été séchée à 25°C puis à l'étuve à 80°C pendant environs 12 heures pour évaporer l'eau et pour mieux réticuler les sphères de résine. Une étape de pyrolyse a ensuite été réalisée dans une atmosphère inerte (Ar), en chauffant ~ 7 g de la résine obtenue avec une vitesse de chauffe de 5°C/min jusqu'à 1500 °C et une fois la température désirée atteinte un pallier d'une heure (1h) est fait puis une étape de refroidissement naturelle est réalisée. Le carbone dur est ainsi obtenu (~ 2.6 g) et il est broyé manuellement. Les carbones sont dénommés MG-00-1500 (à partir de Mimosa-G), MC-00-1500 (à partir de Mimosa-C) ou C-00-1500 (à partir de Cachou).
Pour le précurseur Mimosa G, deux synthèses avec une quantité plus élevée d'acide glyoxylique (14.4 g) ont été effectuées et le polymère obtenu pyrolyse à 1500 et 1600°C (nom des échantillons : MG-00-EG-1500 et MG-00-EG-1600).

### Exemple 2 Caractérisation de nouveaux matériaux carbonés selon l'invention et comparaison avec des matériaux carbonés connus

### 1) Caractérisations physico chimiques

### • Adsorption N₂ et CO₂

Les propriétés texturales (porosité, surface spécifique) des carbones durs selon l'invention ont été étudiés par la technique de sorption de gaz avec un appareil Micromeritics ASAP 2420 (Micromeritics France S.A.R.L. Merignac, France 33700) utilisant l'azote (N₂) comme adsorbant à 77K et avec un Micromeritics ASAP 2020 utilisant le CO₂ comme adsorbant à 273K. Avant l'analyse, les matériaux ont été dégazés à 300°C pour 12h sous vide sur la porte de dégazage pour éliminer les molécules d'eau et un second dégazage a été ensuite effectué pour 2h supplémentaire sur la porte d'analyse pour éliminer le gaz de remplissage. Une masse comprise entre 150 et 300 mg a été employés. La surface spécifique BET (Brunauer, Emmett and Teller) a été calculée dans l'intervalle de pression relative de 0,05-0,3.

### • Diffraction des rayons X (DRX)

La collection des données de diffraction est assurée par un diffractomètre Bruker D8 Advance A25 géométrie thêta/thêta (rayon goniomètre: 280mm), avec anode Cu. La machine est équipée d'un détecteur 1D haute résolution ultra rapide LynxEye XE-T à discrimination d'énergie (<380eV, Cu Ka1,2). Un couteau anti diffusion motorisé pour une suppression efficace de la diffusion de l'air à bas angle est présent. Les échantillons sont préparés en porte-échantillon standard en poly(méthacrylate de méthyle) - (PMMA) en réalisant une pyramide de poudre qui est aplatie à l'aide d'une lame de verre. Les conditions d'acquisition ont été les suivantes: domaine angulaire 10-90°2theta, pas de comptage: 0,01°, temps de comptage par pas:0,5s. Le temps total d'acquisition se monte à 1h08. Lors de cette acquisition, l'échantillon est en mis en rotation à 5trs/mn. Le logiciel DIFFRAC.SUITE, DIFFRAC.EVA assure l'exploitation des diffractogrammes et le calcul de la distance interréticulaire d(hkl) (distance entre deux plans consécutifs de mêmes indices (hkl)) est obtenue par simple application de la loi de Bragg (2d(hkl) sinθ= nλ) ou n est un entier (dans le cas de ce travail, n=1), λ est la longueur d'onde, et θ l'angle d'incidence du faisceau de rayons X sur le plan en condition de diffraction d'indice (hkl).

### • MEB (microscopie électronique en balayage)

La morphologie du matériau carboné a été analysée avec un instrument FEI Quanta 400 Scanning Electron Microscope, *high resolution low vacuum field emission gun* (FEG). Les échantillons ont été analysés avec une résolution entre 1 mm et 10 µm et une magnification jusqu'à 10.000X. Le logiciel ImageJ à été utilisé pour déterminer la taille moyenne des particules. Plusieurs images ont été analysé et environ 700 à 1000 particules compté afin de réaliser un histogramme de distribution de tailles des particules.

### • TPD-MS (désorption programmé en température couplé à la spectrométrie de masse)

La thermodésorption programmée couplée à la spectrométrie de masse (TPD-MS) est une méthode d'analyse permettant l'étude des changements de structure dans la masse d'un matériau soumis à une variation de température contrôlée. Plus précisément, la TPD-MS mesure la vitesse de désorption des molécules en fonction de la température, donnant de précieuses informations concernant les cinétiques de désorption, les concentrations de surface, les sites d'adsorption, etc. En ce qui concerne les matériaux carbonés, la TPD-MS est principalement utilisée pour identifier les fonctions de surface oxygénées ; fonctions qui en se décomposant libèrent du CO, CO₂, H₂O et H₂ à la température spécifique de stabilité thermique du groupe fonctionnel correspondant. Les mesures de thermodésorption ont été réalisées en utilisant un montage « fait-maison » fonctionnant sous vide, équipé d'un spectromètre de masse (pression maximale 10⁻⁴ Torr).

Avant de faire les analyses, le spectromètre de masse est étalonné avec les gaz suivants : H₂ (m/z=2), H₂O (m/z=18), CO (m/z=28), N₂ (m/z=28), O₂ (m/z=32) et CO₂ (m/z=44).

Environ 15-60 mg HC sont placé dans une nacelle en quartz puis dans un four et dégazé pendant 12h sous vide secondaire afin d'éliminer l'eau physisorbée. La TPD-MS est réalisée jusqu'à 950°C (avec une vitesse de chauffage de 5°C/min suivi d'un pallier d'une heure), et la phase gazeuse libérée est analysée de manière quantitative, pendant toute la durée de l'analyse, par le spectromètre de masse.

### • Un autre paramètre important pouvant être déterminé par TPD-MS est la surface active (ASA : Active Surface Area).

La surface active d'un matériau carboné correspond à l'ensemble des différents types de défauts présents dans le carbone : les défauts d'empilement, les lacunes simples et multiples, ainsi que les dislocations. La présence de tels sites actifs est importante car ils peuvent interagir avec d'autres espèces (i.e. Li⁺, Na⁺). L'ASA consiste à réaliser une chimisorption d'oxygène suivie par une mesure de TPD-MS. Après une première mesure de TPD-MS, l'échantillon sous vide est mis en contact avec de l'oxygène à 300°C (pression d'oxygène : 66,5 Pa), qui est chimisorbé pendant 10h, conduisant à la formation de complexes oxygénés à la surface du matériau. Après ces 10h, l'oxygène est éliminé du système et une deuxième TPD-MS est réalisée (jusqu'à 950°C avec une vitesse de chauffage de 10°C/min), et les groupements oxygénés formés sont décomposés en CO et CO₂, leurs quantités étant alors déterminées par spectrométrie de masse. Pour finir, la valeur de l'ASA est calculée en prenant en compte le nombre de moles de chacun des gaz désorbés, en considérant que la surface d'un site actif du matériau carboné qui adsorbe un atome de l'oxygène est de 0,083 nm².

### • Densité tapée (masse volumique tassée)

Cette valeur est mesurée à l'aide d'un volumètre de tassement, tel que le STAV II de chez J. Engelsmann, Ludwigshafen (DE). Le mode opératoire est le suivant :
o Ajout de 2g environ de matériau dans une éprouvette graduée de 10ml
o Mesure du volume initiale (densité apparente)
o Lancer 12000 coups (3 cycles de 4000 coups) en mesurant le volume à chaque fin de cycle (densité tapée finale à 12000 coups).

Pour distinguer les nouveaux matériaux de ceux connus, les propriétés de matériaux connus ont également été étudiées et mesurées. Ces carbones connus sont les suivants :
- Carbone dur commercial de référence **PAC2***(AEKYUNG PETROCHEMICAL, K, Corée du Sud);
- Carbone dur **PR 600** obtenu selon la méthode décrite dans Maetz et al. Green Chemistry 19 (2017) p.2266;
- Carbone dur PR 1200 et 1500 décrit dans E. Irisarri et al. (Journal of The Electrochemical Society, 165 (16) A4058-A4066 (2018*))*
- Carbone dur **HC-water** obtenu selon la méthode décrite dans Beda et al., Carbon 139 (2018) 248-257, avec l'eau comme solvent (cf. tableau 1, ligne 3).

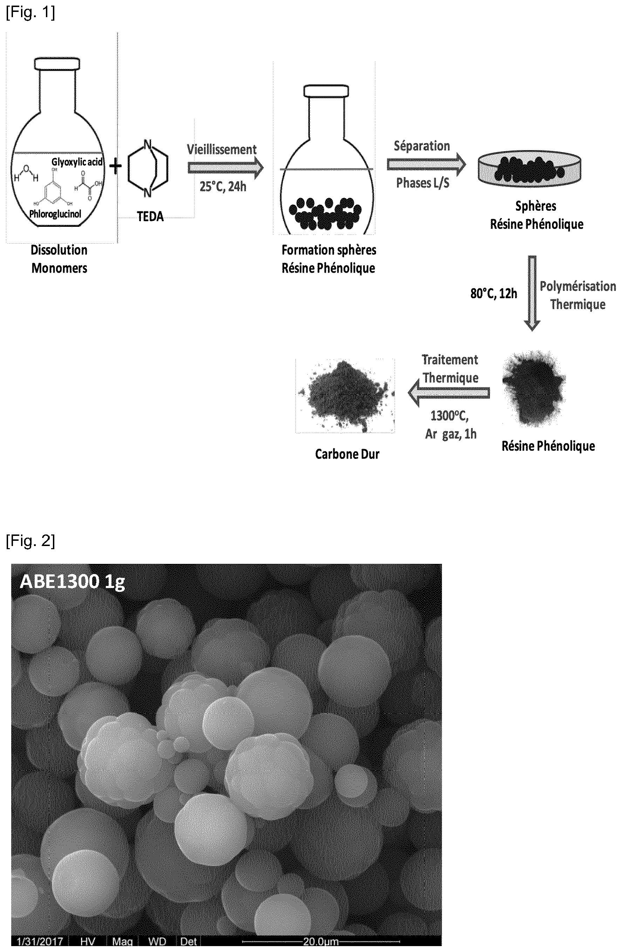

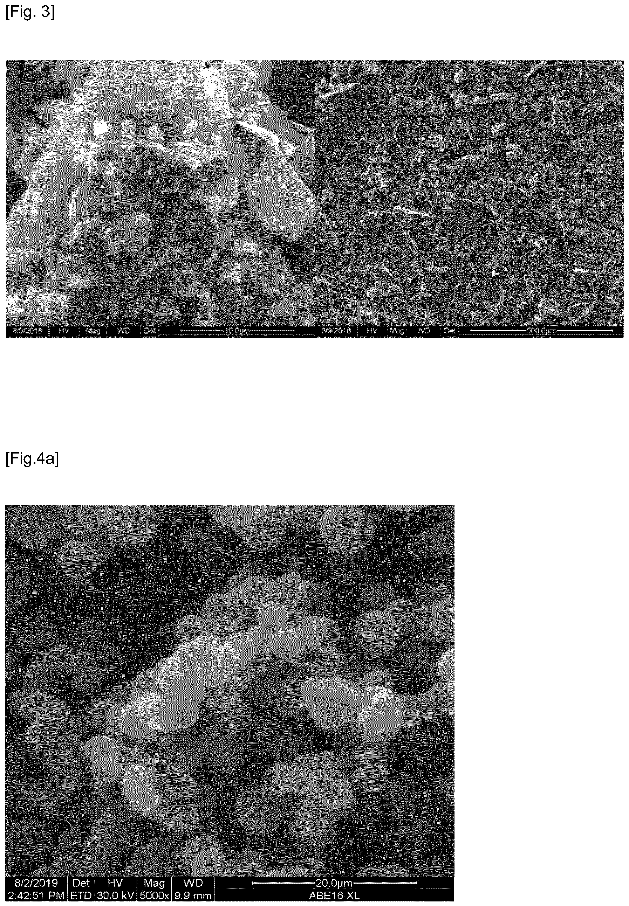

Les résultats de ces mesures sont notamment compilés dans le tableau comparatif ci-dessous ainsi que dans les figures 2 et 3.

**[Tableau 1]**

| *Noms* | *TT* (°C) | d₀₀₂ *(Å)* | *S_{BET} N₂ (m²*/*g)* | *S_{BET}CO₂ (m²*/*g)* | *COx (mmol*/*g)* | *ASA (m²*/*g)* | *Morphologie* | *Taille de particule (µm)* |
|---|---|---|---|---|---|---|---|---|
| ABE1300 | 1300 | 3,90 | 2,7 | 60,0 | 0,36 | 11,9 | sphères | 3,5/7,5 |
| ABE1400 | 1400 | 3,88 | 7,0 | 20,4 | 0,11 | 3,3 | sphères | 3,9/7,5 |
| ABE1500 | 1500 | 3,80 | 3,5 | 6,4 | 0,046 | 1,2 | sphères | 3,4/7,0 |
| ABE1600 | 1600 | 3,77 | 6,1 | 9,1 | 0,044 | 1,3 | sphères | 3,5/7,7 |
| MC-00-1500 | 1500 | 3,73 | 8,5 | 9.2 | 0,15 | 5,8 | sphères | 2,3 |
| MG-00-1500 | 1500 | 3,75 | *6,0* | 14,6 | 0,13 | 4,3 | sphères | 4,2 |
| C-00-1500 | 1500 | 3,67 | *11,2* | 17,4 | 0,22 | 6,5 | sphères | 0,45 |
| MG-00-EG-1500 | *1500* | *3,75* | *6,5* | *10,5* | 0,12 | 4,8 | sphères | *3,7* |
| MG-00-EG-1600 | *1600* | *3,72* | *6*,*8* | 13,3- | 0,09 | 3,2 | sphères | *3,8* |
| *PAC2* | - | *3,75* | *3,8* | *3*,*6* | *0,07* | *6,4* | *aléatoire* | *9* |
| *HC-water* | *1300* | *4,00* | *72* | *220* | *0,21* | *8,4* | *aléatoire* | *5 - 200* |
| *PR-600* | *600* | *4,00* | *450* | - | *5,66* | - | *sphères* | *2-6* |
| *PR-1200* | *1200* | *3,88* | *30* | *394* | *0,86* | *24* | *aléatoire* | *30-200* |
| *PR-1500* | *1500* | *3,72* | *58* | *139* | *0,64* | *17* | *aléatoire* | *30-200* |

| | | | | | | | | |
|---|---|---|---|---|---|---|---|---|
| TT - Température de traitement thermique ; d₀₀₂ - distance interréticulaire déterminé par DRX ; *S_{BET}* N₂ et *S_{BET}* CO₂ - surfaces BET déterminées par adsorption N₂ et de CO₂ ; COx - quantité de groupes fonctionnels à base d'oxygène évalués par TPD-MS ; ASA - surface active obtenue par chimisorption d'oxygène et TPD-MS ; Taille des particules obtenues par la technique MEB. | | | | | | | | |

Le carbone dur selon l'invention a une morphologie sphérique et relativement uniforme, ce qui permet de le distinguer des carbones durs actuellement disponibles. Ainsi qu'il est clair lorsque l'on compare les morphologies d'un carbone dur selon l'invention et d'un carbone dur connu, qui sont respectivement représentées aux figures 2 et 3, un carbone dur de type connu (Beda *et al.* et Irisarri *et al*.) présente une morphologie particulaire hétérogène et aléatoire, non sphérique, ayant des tailles très grandes (jusqu'à 200µm). Le carbone dur selon l'invention non seulement présente une morphologie de ces particules qui est sphérique et uniforme, mais également de manière préférentielle une uniformité de taille. Enfin cette taille moyenne des particules est avantageusement plus petite (< 10µm).

Le carbone dur selon l'invention est également très différent des carbones amorphes sphériques connus tels que le carbone PR 600 (Maetz *et al*.). Le carbone dur selon l'invention est également un carbone non -poreux, c'est-à-dire un carbone ayant un petit volume totale de pores, ou encore une surface spécifique faible et notamment ayant une surface spécifique BET N₂ inférieure à 100 m²/g. Une autre caractéristique avantageuse est une faible quantité de fonctions oxygénées (COx) à la surface du matériau.

Le tableau 2 ci-dessous met en évidence d'autres différences entre le type du carbone dur selon l'invention ABE1300 et le carbone poreux PR600.

**[Tableau 2]**

| ***-mesuré par XPS** : | | |
|---|---|---|
| Paramètre | PR600 | ABE1300 |
| Composition chimie de surface* | Carbone dopé à l'azote (3-4 %N, 8% O, 88 % C) | Carbone sans azote (97 % Cet 3 % O) |
| Masse Volumique ** | 1.6 g/cm³ | 2.1 g/cm³ |

La spectroscopie photoélectronique à rayons X (XPS) a été réalisée avec un spectromètre VG SCIENTA SES-2002 équipé d'un analyseur hémisphérique concentrique. Le rayonnement incident utilisé a été généré par une source de rayons X monochromatique Al Ka (1486,6eV) fonctionnant à 420W (14 kV; 30 mA). Le signal du large spectre de balayage (spectre survol en anglais) a été enregistré avec une énergie de passage de 500 eV.

****Mesurée par pycnomètre à gaz :** Modèle : Accupyc 1330^{™} de chez Micromeritics, sous He. Mode opératoire : 20 purges avec 5 répétitions sur une cellule de 1mL remplie au ¾.

### Exemple 3 : Effet de l'étape de thermopolymérisation

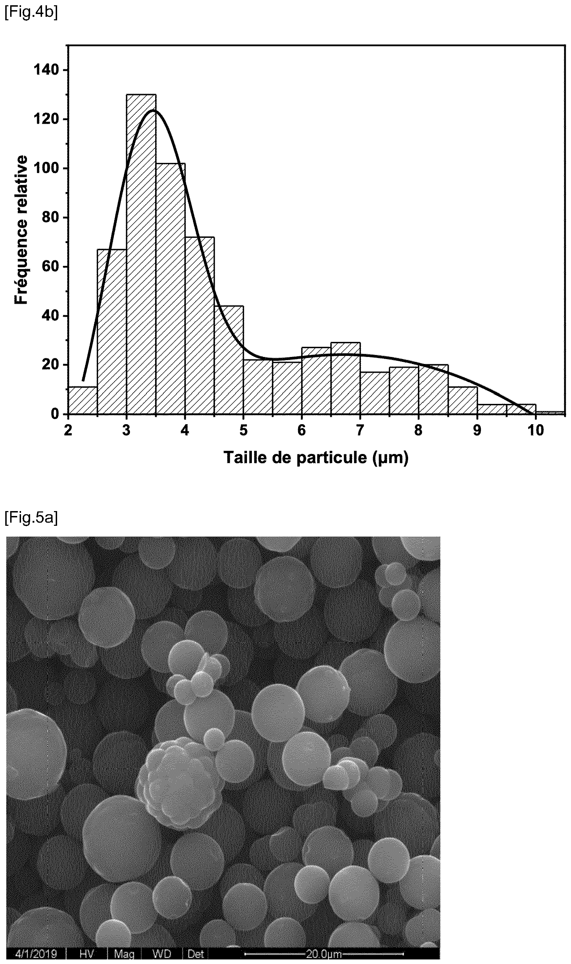

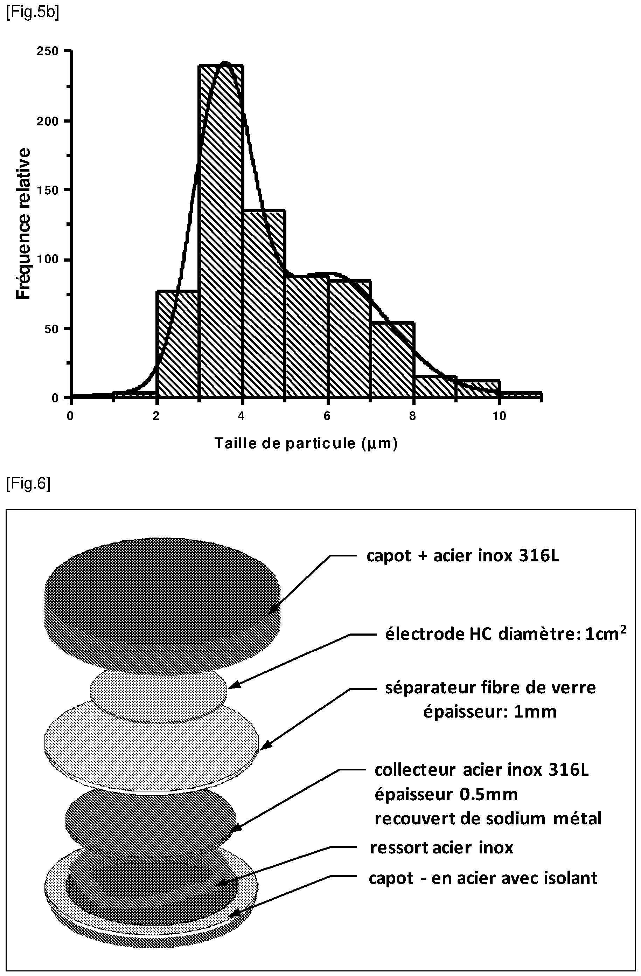

L'utilisation d'une étape de thermopolymérisation permet d'obtenir des distributions différentes en termes de tailles moyennes de particules. Un matériau carboné selon l'invention a été obtenu en effectuant une synthèse identique à celles de l'exemple 1 ayant une étape thermique à 1300°C mais où l'étape de thermopolymérisation a été remplacée par une étape de séchage (ou de polymérisation simple par repos) à 25°C. Les résultats sont représentés aux figures 4a et 4b et 5a et 5b qui montrent une distribution typique pour le matériau sans étape thermique (Fig.5a et b) avec deux pics pour une taille moyenne à environ 3,5 µm et 6,5 µm et une distribution plus complexe avec deux pics distincts de tailles de particules moyennes à 3.5 µm et 7,4 µm. Une telle distribution hétérogène peut être avantageuse pour la porosité de l'électrode. La mesure de la granulométrie de ces matériaux a été faites en utilisant les images MEB et le logiciel ImageJ qui a été utilisé pour déterminer la taille moyenne des particules. Plusieurs images MEB ont été analysé et environ 700 à 1000 particules compté afin de réaliser un histogramme de distribution de tailles des particules.

### Exemple 3bis

L'effet du catalyseur TEDA vs HMTA a été analysé en utilisant comme précurseur, ou composé aromatique hydroxylé, du Mimosa-C. Les procédé selon l'invention décrit à l'exemple 1 pour le Mimosa-C a été répliqué l'utilisation ; soit de 0,5 g de TEDA soit 0,624 g d'HMTA. 1 g de précurseur i.e., Mimosa-C et 1.2 g acide glyoxylique ont été dissout dans 40 mL (g) l'eau sous agitation mécanique (~ 30 min) à la température ambiante (25°C) dans un ballon. Ensuite, le TEDA ou l'HMTA ont été ajoutées dans ce mélange et qui a été agité pendant environ 5-10 min jusqu'à dissolution compète.

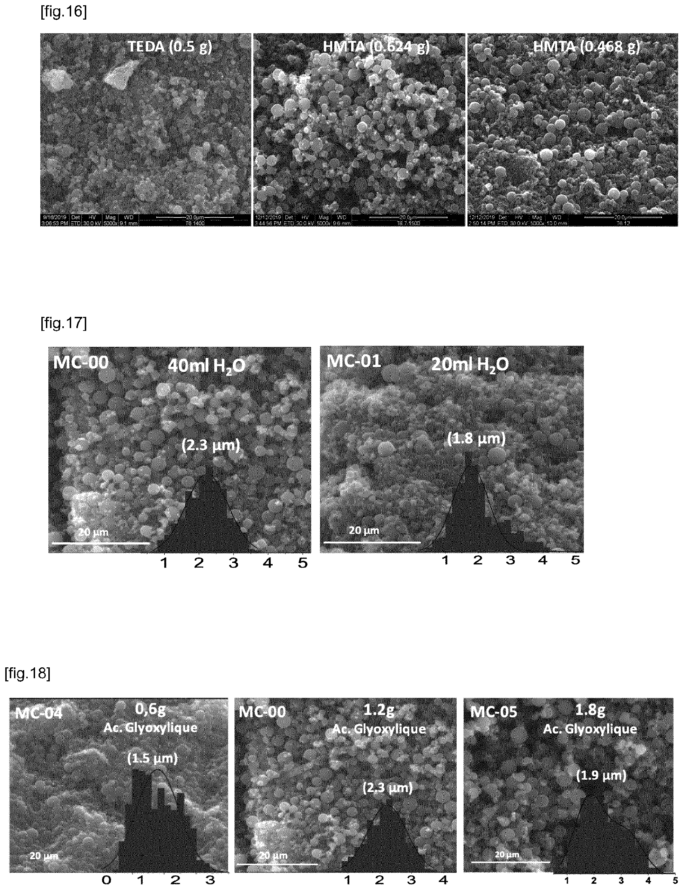

On a observé que le rendement en polymère récupéré après la phase de séparation solide/liquide est substantiellement amélioré (de 33% à 82%) quand l'HMTA est utilisé au lieu du TEDA. De plus, comme le montre la figure 16, la morphologie obtenue en présence du HMTA est mieux définie et la taille des particules plus élevée. Enfin l'utilisation d'une quantité d'HMTA plus élevée (0,624 g vs. 0,468 g) permet d'obtenir une meilleure uniformité.

En utilisant la synthèse décrite dans cet exemple avec 0,624 g d'HMTA, l'impact de la d'une variation de la quantité d'eau et d'acide glyoxylique ainsi que du temps de repos, ou maturation, ont été étudiés. Ces données sont présentées dans les tableaux A, B et C at dans les figures 17, 18 et 19.

**Tableau A**

| **Échantillon** | **MC-00** | MC-01 |
|---|---|---|
| Mimosa-C | 1 g | 1 g |
| Acide Glyoxylique | 1.2 g | 1.2 g |
| **H₂O** | **40 ml** | **20 ml** |
| HMTA | 0.624 g | 0.624 g |
| Mélange durant la phase de maturation | Non | Non |
| Temps de maturation | 48 h | 48 h |
| Masse de polymère | 0.82 g | 1.02 g |
| Morphologie | Sphères (2.3µm) | Sphères (1.8 µm) |
| Rendement carbone | 30% | 45 % |

La réduction de la quantité d'eau a un effet avantageux sur le rendement de carbone selon l'invention. Il est également noté que la taille des particules diminue (cf. Figure 17).

**Tableau B**

| **Échantillon** | **MC-04** | **MC-00** | **MC-05** |
|---|---|---|---|
| Mimosa-C | 1 g | 1 g | 1 g |
| **Acide Glyoxylique** | **0.6 g** | **1.2 g** | **1.8g** |
| H₂O | 40 ml | 40 ml | 40 ml |
| HMTA | 0.624 g | 0.624 g | 0.624g |
| Mélange durant la phase de maturation | Non | Non | Non |
| Temps de maturation | 48 h | 48 h | 48 h |
| Masse de polymère | - | 0.8201 g | 0.9809 |
| Morphologie | Sphères (1,5µm) | Sphères (2,3 µm) | Sphères (1.9 µm) |
| Rendement carbone | 34% | 30% | 43% |

Une diminution de la quantité d'acide glyoxylique apparait réduire la taille des particules (cf. Fig. 18).

**Tableau C**

| **Échantillon** | **MC-0524** | **MC-05** | **MC-0572** | **MC-0597** |
|---|---|---|---|---|
| Précurseur | Mimosa-C | Mimosa-C | Mimosa- C | Mimosa-C |
| Masse | 1 g | 1 g | 1 g | 1 g |
| Acide Glyoxylique | 1.8g | 1.8g | 1.8g | 1.8g |
| H₂O | 40 ml | 40 ml | 40 ml | 40 ml |
| HMTA | 0.624g | 0.624g | 0.624g | 0.624g |
| Mélange | Non | Non | Non | Non |
| **Temps de maturation** | **24 h** | **48 h** | **72 h** | **97 h** |
| Morphologie | Sphères (1,8µm) | Sphères (1.9 µm) | Sphères (2,4 µm) | Sphères (2,2 µm) |
| Rendement carbone | 26.0% | 44.0% | 47.0% | 51.0% |

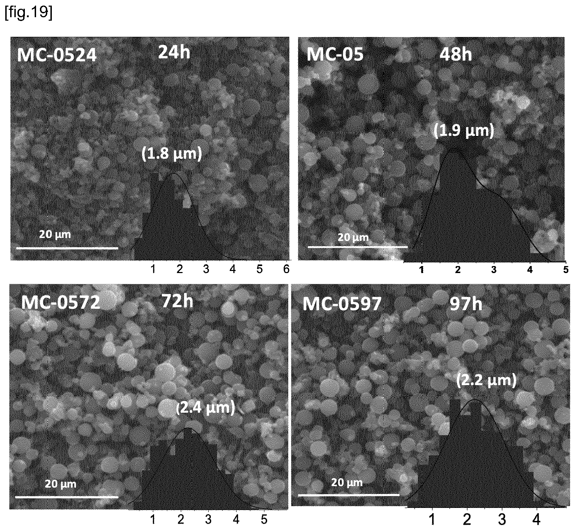

Le temps de repos apparait être optimisé aux environs de 48h car une augmentation de cette durée ne permet qu'une petite augmentation de la taille des sphères (cf. Fig. 19).

### Exemple 4 : Exemples de dispositifs électrochimiques selon l'invention et données comparatives avec un matériau de l'art antérieur (PAC2)

Des cellules électrochimiques de type boutons ont été assemblées selon le schéma de la Figure 6.

Des électrodes selon l'invention sont fabriquées en mélangeant :
- 94% en masse d'un carbone dur selon l'invention ABE 1300, ABE 1400, ABE 1500 et ABE 1600 ;
- 3% en masse de noir de carbone en tant qu'additif conducteur (C45 de la société Imerys, Paris, FR) ; et
- 3% en masse de poly(fluorure de vinylidène) (PVDF), PVDF 5130 ou SOLEF de la société SOLVAY, en tant que liant polymère ; au mortier pendant 5 minutes.

≈1 g de poudre dispersée est mise dans un flacon avec un barreau aimanté. ≈1 g de solvant *N*-méthyl-2-pyrrolidone (NMP) (N° CAS 872-50-4) est ajouté et le mélange est dispersé 12h à 300rpm à 25°C. Le liquide, ou encre, ainsi obtenu est déposé par enduction sur un collecteur d'aluminium (provenant de RJC HOLDINGS CORPORATION à Incheon-City en Corée du Sud). La couche d'encre est séchée 2h à 60°C sous flux d'air. Les films ainsi obtenus ont une épaisseur comprise entre 130µm et160µm (collecteur inclus) et une masse variant entre 7.5-1 0.2mg/cm² de matériau actif. Les films sont ensuite calandrés par passage successif entre 2 rouleaux distants d'une grandeur de plus en plus faible jusqu'à obtenir un film dont l'épaisseur reste inchangée quel que soit la pression appliquée sur le film. Les films sont ensuite pastillés pour obtenir des électrodes circulaires de 1cm² pour les batteries cyclant vs Na et de 1.327cm² pour celles cyclant vs NVPF. Les électrodes sont ensuite séchées dans une étuve à 70°C pendant 2h ainsi que les différentes parties de l'assemblage pile bouton.

Pour les dispositifs en cellule complète, les électrodes de NVPF sont obtenues en mélangeant :
92% en masse de NVPF produit par le LRCS à Amiens
4% en masse de noir de carbone en tant qu'additif conducteur (C45 de la société Imerys, Paris, FR) ; et
4% en masse de poly(fluorure de vinylidène) (PVDF), PVDF 5130 ou SOLEF de la société SOLVAY, en tant que liant polymère ;
au mortier pendant 5 minutes.

≈1 g de poudre dispersée est mise dans un flacon avec un barreau aimanté. ≈1 g de *N*-méthyl-2-pyrrolidone (NMP) (N° CAS 872-50-4) est ajouté et le mélange est dispersé 12h à 300rpm à 25°C. Le liquide, ou encre, ainsi obtenu est déposé par enduction sur un collecteur d'aluminium de 22µm (provenant de RJC HOLDINGS CORPORATION à Incheon-City en Corée du Sud). La couche d'encre est séchée 2h à 60°C sous flux d'air. Les films ainsi obtenus ont une épaisseur comprise entre 140µm et 200µm (collecteur inclus) et une masse variant entre 15-20mg/cm² de matériau actif.

Les films sont ensuite calandrés par passage successif entre 2 rouleaux distant d'une grandeur de plus en plus faible jusqu'à obtenir un film dont l'épaisseur reste inchangée quel que soit la pression appliquée sur le film. Les films sont pastillés pour obtenir des électrodes circulaires de 1.327cm². Les électrodes sont ensuite séchées dans une étuve à 70°C pendant 2h ainsi que les différentes parties de l'assemblage pile bouton. Les électrodes comprenant du matériau ABE 1400, 1500 et 1600 ont été associées à du sodium métal (pour constituer une configuration en demi-élément ou demi cellule « half cell »). L'électrode comprenant du matériau ABE 1300 a été associée à une électrode à base de Sodium vanadium (III) fluorophosphate (NVPF), pour constituer une configuration en une cellule complète, « full cell »).

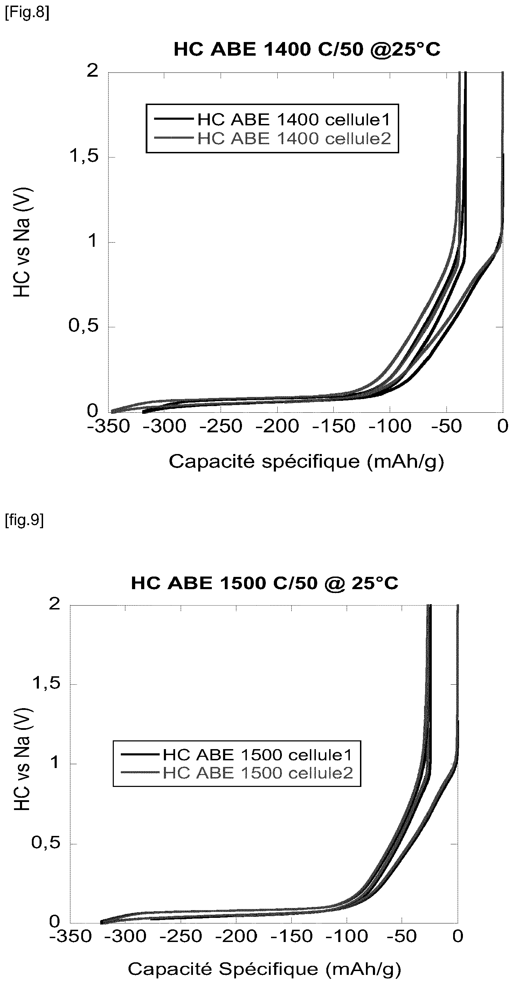

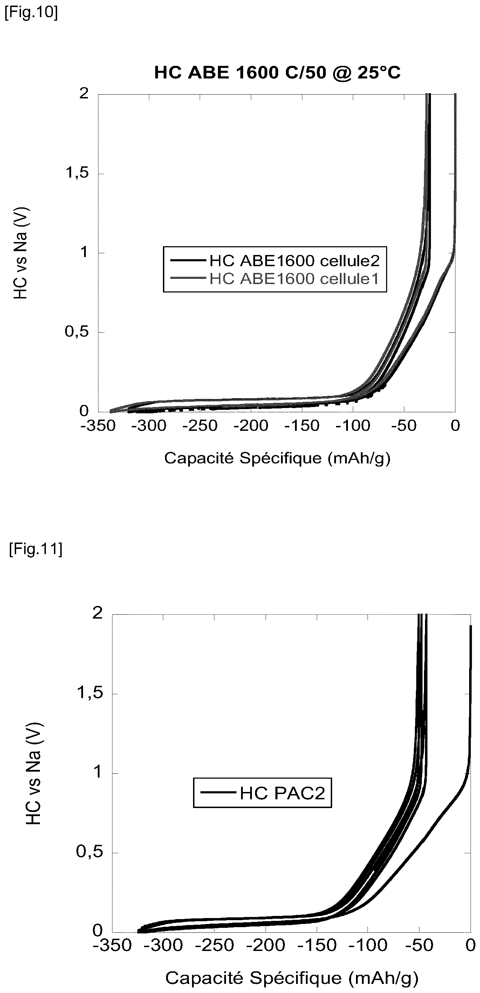

Les éléments du dispositif en demi-élément sont représentés à la figure 6. A l'exception des électrodes, ils proviennent de la société INNOV' METOR, FERRIERES EN GATINAIS, FR. Un ressort 6 en acier inoxydable est positionné dans une partie inférieure 2 d'un capot en acier et à l'intérieur d'un anneau isolant 4. Un collecteur de courant 8 en acier inoxydable 316L et d'épaisseur 0,5 mm est positionné sur le ressort circulaire. Ce collecteur 8 est un disque de diamètre d'environ 15 mm recouvert de sodium métal. Du sodium métal a été étalé sur toute la surface supérieure du collecteur 8 puis gratté à la spatule afin d'obtenir une surface propre, sans oxydes métalliques. Un disque séparateur 10 en fibres de verre, d'épaisseur 1mm et de diamètre 16mm est positionné sur la surface de sodium métal. 200 µL d'électrolyte est alors ajouté. Cet électrolyte est un mélange d'éthyle carbonate (EC) et de carbonate de diméthyle (DMC) dans des proportions (1 :1 %masse- mélange auquel le sel NaPF₆ est ajouté dans des proportions de 1mol/L. Puis une électrode 12 en carbone dur telle que décrite ci-dessus est positionnée sur le séparateur 10. Enfin la partie supérieure 14 du capot en acier inoxydable est positionnée pour encapsuler l'électrode 12 et les deux parties du capot 2 et 14 sont solidarisées ensemble (par exemple serties). Dans ce dispositif l'électrode 12 est en position de cathode et le sodium métal d'anode. La réalisation de ce dispositif est effectuée sous argon dans une boite à gant. La cellule électrochimique est laissée au repos 2 heures avant le premier cycle. Les caractéristiques du dispositif sont alors mesurées par cyclage galvanostatique à C/50 en décharge et en charge avec un repos d'1mn entre 2 modes. Deux demi piles (CELLULE 1 et CELLULE 2) ont été étudiées et comme le montre les résultats aux Figures 8 à 10, les courbes obtenues sont identiques. L'acquisition des valeurs de capacité spécifique a été effectuée lorsque la variation du potentiel atteint 10mV par rapport à l'acquisition précédente et/ou toute les 5 secondes. De cette façon il est possible de connaître la capacité spécifique avec précision.

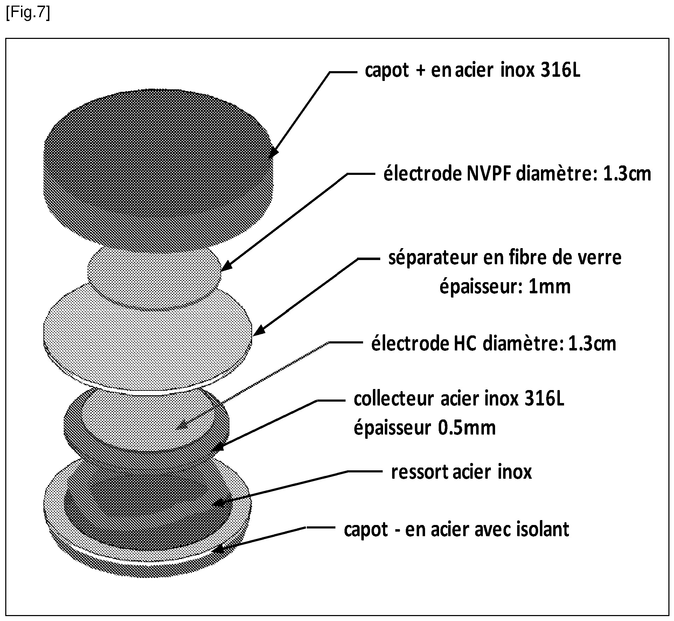

Les éléments du dispositif en cellule complète sont représentés à la figure 7. A l'exception des électrodes, ils proviennent de la société INNOV' METOR, FERRIERES EN GATINAIS, FR. Un ressort 106 en acier inoxydable est positionné dans une partie inférieure 102 d'un capot en acier et à l'intérieur d'un anneau isolant 104. Un collecteur de courant 108 en acier inoxydable 316L et d'épaisseur 0,5 mm est positionné sur le ressort circulaire. Ce collecteur 108 est un disque de diamètre d'environ 15 mm sur lequel est positionné une électrode 112 comprenant un matériau selon l'invention ABE 1300. L'électrode 112 adopte la forme d'un disque de 1,3 cm de diamètre et de d'environ 110µm (collecteur inclus) d'épaisseur. Un disque séparateur 110 en fibres de verre, d'épaisseur 1mm et de diamètre16 mm est positionné sur l'électrode 112. 200 µL d'électrolyte est alors ajouté. Cet électrolyte est un mélange d'éthyle carbonate (EC) et de carbonate de diméthyle (DMC) dans des proportions (1 :1 %en masse.), mélange auquel du NaPF6 est ajouté dans des proportions de 1mol/L. Puis une électrode 109 NVPF de diamètre de 1,3 cm telle que décrite ci-dessus est positionnée sur le séparateur 110. Enfin la partie supérieure 114 du capot en acier inoxydable est positionnée pour encapsuler les électrodes 112 et 109 et les deux parties du capot102 et 114 sont solidarisés ensemble (par exemple serties). Dans ce dispositif l'électrode 112 constitue l'anode et l'électrode 109 la cathode. La réalisation de ce dispositif est effectuée sous argon dans une boite à gant. La cellule électrochimique est laissée au repos 2 heures avant le premier cycle. Le rapport de masse entre la masse de NVPF et du matériau ABE 1300, NVPF/ABE1300 varie entre 2 et 2,5.

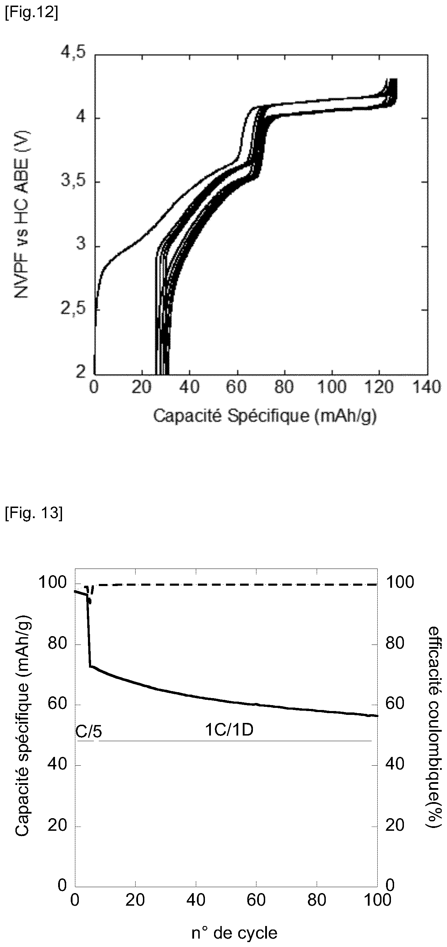

La variation de la capacité spécifique en fonction de la tension est représentée aux figures 12 et 13 et a été mesurée comme suit :

### Cyclage rétention :

- Formation : cyclage galvanostatique sur 5 cycles à C/5 & D/5 à 25°C avec un repos de 5mn
- Rétention : cyclage galvanostatique à 1C & 1D à 25°C avec un repos de 5mn.

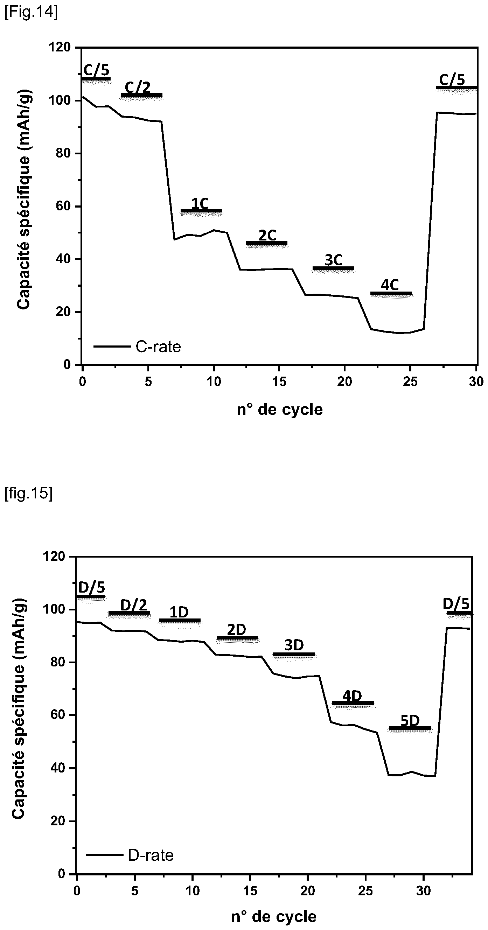

Les capacités spécifiques de la cellule ont été mesurées comme suit :
Les capacités spécifiques en fonction du régime appliqué (à différents courants) permettent d'obtenir des informations importantes sur les performances des cellules en puissance par exemple en vue d'adresser certaines applications industrielles représentées aux figures 14 et 15.

### Cyclage puissance :

- Formation : cyclage galvanostatique sur 5 cycles à C/5 & D/5 à 25°C avec un repos de 5mn
- Crate : cyclage galvanostatique à charge variable sur 5 cycles : de C/5 à 4C et à décharge constant : D/5 à 25°C avec un repos de 5mn
- Drate : cyclage galvanostatique à charge constante : C/5 & à charge variable sur 5 cycles : de D/5 à 4D à 25°C avec un repos de 5mn

La capacité spécifique de la cellule est élevée (environ 125 mAh*g⁻¹). La capacité spécifique de décharge correspond à 80% de la capacité de charge ce qui correspond à une capacité initiale irréversible de 25 mAh g⁻¹, lorsqu'il est cyclé à un taux C/5. Cette perte de capacité est due à l'irréversibilité de l'électrode ayant la plus grande irréversibilité, soit le hard carbon / carbone dur (irréversibilité du NVPF : 10%). La capacité diminue à -75 mAh g-1 lorsqu'elle est cyclée à 1C/1D. Lors de l'évaluation du régime (variation du courant) sur la capacité, il a été constaté que le taux de cyclage utilisé pendant l'étape de charge/décharge (insertion/extraction de Na+ dans/de l'anode en carbone dur) est essentiel pour assurer un bon rendement. Si un courant suffisamment faible est utilisé pour charger la cellule, même des débits de décharge élevés (3D) finissent par donner de bonnes performances (-80 % de capacité de rétention). Au contraire, lorsqu'un taux de charge rapide est utilisé (c.-à-d. 1C), on obtient un faible rendement même si le courant de décharge appliqué est faible (c.-à-d. D/5).

La porosité, les groupes fonctionnels COx et les défauts de structure quantifiés par l'ASA ont une influence importante sur la capacité irréversible initiale. La capacité irréversible diminue avec la diminution des défauts de structure (ASA) et avec la diminution des groupes de COx. De plus la capacité irréversible diminue avec l'augmentation de la densité tapée.

Le tableau 3 ci-dessous compile des caractéristiques de matériaux carbonés selon l'invention et celles des cellules les comprenant ainsi que les caractéristique d'un matériau de l'art antérieur PAC2 et d'une cellule le comprenant telle que décrite ci-dessus.

**[Tableau 3]**

| Matériau carboné | Masse volumique He (g/cm³) | Masse volumique tassée g/cm³) | Porosité après pastillage (%) | Cirrev (%) | Q_{iD} (mAh g⁻¹) | Q_{iC} (mAh g⁻¹) |
|---|---|---|---|---|---|---|
| PAC2* | 1,954 | 0,96 | 46 | 14 | 323 | 278 |
| ABE1300 | 2,107 | 0,71 | 62 | 11 | 341 | 303 |
| ABE1400 | 2,163 | 0,74 | 54 | 11 | 346 | 307 |
| ABE1500 | 1,875 | 0,84 | 46 | 8 | 320 | 294 |
| ABE1600 | 1,633 | 0,72 | 41 | 8 | 337 | 309 |
| MC-00-1500 | 2,10 | 0,73 | 58 | 15 | 374 | 315 |
| MG-00-1500 | 2,05 | 0,73 | 56 | 15 | 385 | 329 |
| C-00-1500 | 1,97 | 0,71 | 58 | 18 | 354 | 286 |
| MG-00-EG-1500 | 2,12 | 0,67 | 64 | 17 | 403 | 334 |
| MG-00-EG-1600 | 1,85 | 0,70 | 49 | 13 | 366 | 317 |
| PR1200 | / | 0,7 | / | / | / | / |
| PR1500 | / | 0,7 | / | / | / | / |

| | | | | | | |
|---|---|---|---|---|---|---|
| Cirrev = capacité irréversible; Q_{iD} = capacité de décharge initiale, Q_{iC} = capacité de charge initiale. | | | | | | |

Les matériaux selon l'invention présentent un avantage important en termes de capacité initiale irréversible, capacité qui est inférieure par rapport à d'autres matériaux similaires en carbone dur.

## Revendications

1. Un matériau carboné comprenant des particules de carbone dur et non poreux ayant une morphologie sphérique, ce matériau ayant une distance interréticulaire d₀₀₂ supérieure à 3,6 Å, une surface spécifique totale, mesurée par la méthode BET N₂, inférieure à 75 m²/g et une surface spécifique totale, mesurée par la méthode BET CO2, de 1 à 100 m²/g, de préférence de 1 à 60 m²/g.

2. Le matériau carboné selon la revendication 1, où la distance interréticulaire, est comprise entre 3,70 Å et 4,00 Å, avantageusement est choisi dans une gamme allant de 3,75 Å à 3,90 Å, et encore plus préférentiellement dans une gamme allant de 3,70 Å à 3,80 Å.

3. Le matériau carboné selon la revendication 1 ou 2, où ladite surface spécifique totale, mesurée par la méthode BET N₂, est de 1 à 50 m²/g, en particulier de 1 à 10 m²/g, et encore plus préférentiellement de 1 à 3,5 m²/g.

4. Le matériau carboné selon l'une quelconque des revendications 1 à 3, où ladite surface spécifique totale, mesurée par la méthode BET CO₂, est de 1 à 21 m²/g, et très préférentiellement de 1 à 10 m²/g.

5. Le matériau carboné selon l'une quelconque des revendications 1 à 4, où ledit matériau présente une masse volumique tassée supérieure à 0,7 g/cm³, par exemple qui est choisie dans la gamme de 0,72 g/cm³ à 1.1 g/cm3, de préférence supérieure à 0,84 g/cm³.

6. Le matériau carboné selon l'une quelconque des revendications 1 à 5, ledit matériau ayant une surface active (ASA) inférieure à 12m²/g, et plus préférentiellement inférieure à 5 m²/g.

7. Le matériau carboné selon l'une quelconque des revendications 1 à 6, ledit matériau ayant une teneur en groupe fonctionnels à base d'oxygène inférieure à 0,5 mmol/g, de préférence inférieure à 0,1 mmol/g, en particulier inférieure à 0.05 mmol/g.

8. Le matériau carboné selon l'une quelconque des revendications 1 à 6, où les particules ont une taille comprise entre 0 µm à 15µm, de préférence entre 0 µm à 10µm.

9. Un procédé de fabrication d'un matériau carboné non-poreux comprenant au moins les étapes suivantes :
a) une étape de mélange, en présence d'un solvant protique polaire, d'au moins :
- un catalyseur aminé choisi dans le groupe constitué de Triéthylènediamine (TEDA), quinuclidine, triéthylamine (TEA), hexaméthylènetétramine (HMTA) et de leurs mélanges ;
- un composé aromatique hydroxylé choisi notamment dans le groupe constitué du phénol, du résorcinol et du phloroglucinol, catéchine, pyrogallol, hydroxyquinol, acide gallique, des polyphénols, tels que les tanins, et de leurs mélanges ;
- un composé aldéhyde, choisi dans le groupe constitué du glyoxal, du formaldéhyde, de l'acétaldéhyde, d'un cétoacide, de l'acide glyoxylique, de l'acide pyruvique, de l'acide 2-méthyl-3-oxopropanoïque, et de leurs mélanges ;
b) une étape de maturation du mélange obtenu à l'issue de l'étape a), de préférence à une température comprise entre 20 et 35°C, par exemple pendant une durée comprise entre 0,5 et 5 jours permettant l'obtention d'une phase solide comprenant des sphères de résine phénolique et d'une phase liquide ;
c) une étape de séparation ménagée de ladite phase solide de ladite phase liquide ;
d) une étape de polymérisation et/ou de séchage de ladite phase solide pendant une période 1 à 48h aboutissant à la formation d'une résine phénolique sèche ;
e) une étape de carbonisation de ladite résine phénolique sèche, de préférence en présence d'un flux de gaz inerte à une température comprise entre 1200 °C et 2000 °C, pour obtenir un matériau carboné non-poreux ; et
f) éventuellement une étape de récupération du matériau carboné.

10. Le procédé selon la revendication 9, où l'étape de polymérisation est une étape thermique, de préférence par chauffage à une température de 70°C à 150°C.

11. Le procédé selon la revendication 10, où le catalyseur aminé est le triéthylènediamine, le composé aromatique hydroxylé est de préférence du phloroglucinol ou un tanin condensé; et ou le composé aldéhyde est de préférence l'acide glyoxylique.

12. Le procédé selon l'une quelconque des revendications 9 à 11, où l'étape de maturation b) est effectuée en l'absence d'agitation.

13. Le procédé selon l'une quelconque des revendications 9 à 12, où l'étape de séparation c) est effectuée sans centrifugation.

14. Une électrode comprenant un matériau carboné tels que décrit à l'une quelconque des revendications 1 à 8.

15. Utilisation d'un matériau carboné tel que décrit à l'une quelconque des revendications 1 à 8 pour la fabrication d'une électrode ou d'un matériau pour électrode.

16. Utilisation d'un matériau carboné telle que décrite à la revendication 15, où ladite électrode est une électrode pour batteries rechargeables, en particulier pour batteries sodium-ion, lithium-ion, potassium-ion ou Li-S.

## Patentansprüche

1. Kohlenstoffhaltiges Material, umfassend harte, nicht-poröse Kohlenstoffpartikel mit einer kugelförmigen Morphologie, wobei das Material einen interplanaren Abstand, bei dem d₀₀₂ größer als 3,6 Å ist, einen gesamten spezifischen Oberflächenbereich, gemessen nach dem BET-N₂-Verfahren, von weniger als 75 m²/g und einen gesamten spezifischen Oberflächenbereich, gemessen nach dem BET-CO₂-Verfahren, von 1 bis 100 m²/g, vorzugsweise von 1 bis 60 m²/g, aufweist.

2. Kohlenstoffhaltiges Material nach Anspruch 1, wobei der interplanare Abstand zwischen 3,70 Å und 4,00 Å liegt, vorteilhafterweise in einem Bereich von 3,75 Å bis 3,90 Å und noch bevorzugter in einem Bereich von 3,70 Å bis 3,80 Å ausgewählt ist.

3. Kohlenstoffhaltiges Material nach Anspruch 1 oder 2, wobei der gesamte spezifische Oberflächenbereich, gemessen nach dem BET-N₂-Verfahren, zwischen 1 und 50 m²/g, insbesondere zwischen 1 und 10 m²/g und noch bevorzugter zwischen 1 und 3,5 m²/g liegt.

4. Kohlenstoffhaltiges Material nach einem der Ansprüche 1 bis 3, wobei der gesamte spezifische Oberflächenbereich, gemessen nach dem BET-CO₂-Verfahren, zwischen 1 und 21 m²/g und vorzugsweise zwischen 1 und 10 m²/g liegt.

5. Kohlenstoffhaltiges Material nach einem der Ansprüche 1 bis 4, wobei das Material eine Packungsdichte von mehr als 0,7 g/cm³ aufweist, die beispielsweise aus dem Bereich von 0,72 g/cm³ bis 1,1 g/cm³, vorzugsweise mehr als 0,84 g/cm³, ausgewählt ist.

6. Kohlenstoffhaltiges Material nach einem der Ansprüche 1 bis 5, wobei das Material einen aktiven Oberflächenbereich (ASA) von weniger als 12 m²/g und vorzugsweise weniger als 5 m²/g aufweist.

7. Kohlenstoffhaltiges Material nach einem der Ansprüche 1 bis 6, wobei das Material einen Gehalt an funktionellen Gruppen auf Sauerstoffbasis von weniger als 0,5 mmol/g, vorzugsweise weniger als 0,1 mmol/g, insbesondere weniger als 0,05 mmol/g, aufweist.

8. Kohlenstoffhaltiges Material nach einem der Ansprüche 1 bis 6, wobei die Partikel eine Größe im Bereich von 0 µm bis 15 µm, vorzugsweise von 0 µm bis 10 µm, aufweisen.

9. Verfahren zur Herstellung eines nicht porösen kohlenstoffhaltigen Materials, umfassend mindestens die folgenden Schritte:
a) einen Mischungsschritt in Anwesenheit eines polaren protischen Lösungsmittels von mindestens:
- einen Aminkatalysator, ausgewählt aus der Gruppe, bestehend aus Triethylendiamin (TEDA), Chinuclidin, Triethylamin (TEA), Hexamethylentetramin (HMTA) und deren Mischungen;
- eine hydroxylierte aromatische Verbindung, die insbesondere aus der Gruppe ausgewählt ist, bestehend aus Phenol, Resorcin und Phloroglucinol, Catechin, Pyrogallol, Hydroxychinol, Gallussäure, Polyphenolen, wie beispielsweise Tanninen, und deren Mischungen;
- eine Aldehydverbindung, ausgewählt aus der Gruppe, bestehend aus Glyoxal, Formaldehyd, Acetaldehyd, einer Ketosäure, Glyoxylsäure, Brenztraubensäure, 2-Methyl-3-oxopropansäure und deren Mischungen;
b) einen Reifungsschritt der in Schritt a) erhaltenen Mischung, vorzugsweise bei einer Temperatur zwischen 20 und 35 °C, zum Beispiel über einen Zeitraum zwischen 0,5 und 5 Tagen, der die Bildung einer festen Phase, die Phenolharzkugeln umfasst, und einer flüssigen Phase ermöglicht;
c) einen Schritt der kontrollierten Trennung der festen Phase von der flüssigen Phase;
d) einen Polymerisations- und/oder Trocknungsschritt der festen Phase über einen Zeitraum von 1 bis 48 Stunden, was zur Bildung eines trockenen Phenolharzes führt;
e) einen Karbonisierungsschritt des trockenen Phenolharzes, vorzugsweise in Gegenwart eines Inertgasstroms bei einer Temperatur zwischen 1200 °C und 2000 °C, um ein nicht poröses kohlenstoffhaltiges Material zu erhalten; und
f) optional einen Schritt zur Gewinnung des kohlenstoffhaltigen Materials.

10. Verfahren nach Anspruch 9, wobei der Polymerisationsschritt ein thermischer Schritt ist, vorzugsweise Erhitzen auf 70 °C bis 150 °C.

11. Verfahren nach Anspruch 10, wobei der Aminkatalysator Triethylendiamin ist, die hydroxylierte aromatische Verbindung vorzugsweise Phloroglucinol oder ein kondensiertes Tannin ist; und die Aldehydverbindung vorzugsweise Glyoxylsäure ist.

12. Verfahren nach einem der Ansprüche 9 bis 11, wobei der Reifungsschritt b) ohne Umrühren durchgeführt wird.

13. Verfahren nach einem der Ansprüche 9 bis 12, wobei der Trennungsschritt c) ohne Zentrifugation durchgeführt wird.

14. Elektrode, umfassend ein kohlenstoffhaltiges Material nach einem der Ansprüche 1 bis 8.

15. Verwendung eines kohlenstoffhaltigen Materials nach einem der Ansprüche 1 bis 8 zur Herstellung einer Elektrode oder eines Elektrodenmaterials.

16. Verwendung von kohlenstoffhaltigem Material nach Anspruch 15, wobei die Elektrode eine Elektrode für wiederaufladbare Batterien ist, insbesondere für Natrium-Ionen-, Lithium-Ionen-, Kalium-Ionen- oder Li-S-Batterien.

## Claims

1. Carbon material comprising particles of hard, non-porous carbon having a spherical morphology, this material having an interlayer distance d₀₀₂ greater than 3.6 Å, a total specific surface area, measured by the BET N₂ method, of less than 75 m²/g and a total specific surface area, measured by the BET CO2 method, of 1 to 100 m²/g, preferably of 1 to 60 m²/g.

2. Carbon material according to claim 1, wherein the interlayer distance is between 3.70 Å and 4.00 Å, advantageously is chosen from a range of 3.75 Å to 3.90 Å, and even more preferentially from a range of 3.70 Å to 3.80 Å.

3. Carbon material according to claim 1 or 2, wherein said total specific surface area, measured by the BET N₂ method, is from 1 to 50 m²/g, in particular from 1 to 10 m²/g, and even more preferably from 1 to 3.5 m²/g.

4. Carbon material according to one of claims 1 to 3, wherein said total specific surface area, measured by the BET CO₂ method, is from 1 to 21 m²/g, in particular from 1 to 10 m²/g.

5. Carbon material according to one of claims 1 to 4, wherein said material has a tapped density greater than 0.7 g/cm³, for example chosen from the range of 0.72 g/cm³ to 1.1 g/cm³, preferably greater than 0.84 g/cm³.

6. Carbon material according to one of claims 1 to 5, said material having an active surface area (ASA) of less than 12 m²/g, and more preferably less than 5 m²/g.

7. Carbon material according to one of claims 1 to 6, said material having an oxygen-based functional group content of less than 0.5 mmol/g, preferably less than 0.1 mmol/g, in particular less than 0.05 mmol/g.

8. Carbon material according to one of claims 1 to 6, wherein the particles have a size between 0 µm and 15 µm, preferably between 0 µm and 10 µm.

9. Method for manufacturing a non-porous carbon material comprising at least the following steps:
a) a step of mixing, in the presence of a polar protic solvent, at least:
- an amine catalyst selected from the group consisting of triethylenediamine (TEDA), quinuclidine, triethylamine (TEA), hexamethylenetetramine (HMTA) and mixtures thereof;
- an aromatic hydroxyl compound chosen in particular from the group consisting of phenol, resorcinol and phloroglucinol, catechin, pyrogallol, hydroxyquinol, gallic acid, polyphenols, such as tannins, and mixtures thereof;
- an aldehyde compound, selected from the group consisting of glyoxal, formaldehyde, acetaldehyde, a keto acid, glyoxylic acid, pyruvic acid, 2-methyl-3-oxopropanoic acid, and mixtures thereof;
b) a step of maturation of the mixture obtained at the end of step a), preferably at a temperature comprised between 20 and 35°C, for example for a period comprised between 0.5 and 5 days, making it possible to obtain a solid phase comprising spheres of phenolic resin and a liquid phase;
c) a step of controlled separation of said solid phase from said liquid phase;
d) a step of polymerization and/or drying of said solid phase for a period of 1 to 48 hours resulting in the formation of a dry phenolic resin;
e) a step of carbonizing said dry phenolic resin, preferably in the presence of a flow of inert gas at a temperature between 1200°C and 2000°C to obtain a non-porous carbon material; and
f) optionally a step of recovering the carbon material.

10. Method according to claim 9, wherein the polymerization step is a thermal step, preferably by heating to a temperature of 70°C to 150°C.

11. Method according to claim 10, wherein the amine catalyst is triethylenediamine, the aromatic hydroxyl compound is preferably phloroglucinol or a condensed tannin; and wherein the aldehyde compound is preferably glyoxylic acid.

12. Method according to one of claims 9 to 11, wherein the maturation step b) is carried out in the absence of stirring.

13. Method according to one of claims 9 to 12, wherein the separation step c) is carried out without centrifugation.

14. Electrode comprising a carbon material as described in one of claims 1 to 8.

15. Use of a carbon material as described in any one of claims 1 to 8 for the manufacture of an electrode or an electrode material.

16. Use of a carbon material according to claim 15, wherein said electrode is an electrode for rechargeable batteries, in particular for sodium-ion, lithium-ion, potassium-ion or Li-S batteries.
